# EUROPEAN PATENT APPLICATION

(11) **EP 4 583 551 A1**
(43) Date of publication of application: **09.07.2025**
(21) Application number: 23870847.3
(22) Date of filing: 26.09.2023
(51) Int. Cl.: H04W 8/06, H04W 12/04

(54) **COMMUNICATION METHOD AND COMMUNICATION APPARATUS**

(30) Priority: 30.09.2022 CN 202211215255
(71) Applicant: Huawei Technologies Co., Ltd., Shenzhen, Guangdong 518129 (CN)
(72) Inventor: LI, He, Shenzhen, Guangdong 518129 (CN); WU, Rong, Shenzhen, Guangdong 518129 (CN); XU, Yishan, Shenzhen, Guangdong 518129 (CN)
(74) Representative: Goddar, Heinz J.
(86) International application number: PCT/CN2023/121659
(87) International publication number: WO 2024/067619

(57) **Abstract**

Embodiments of this application provide a communication method and a communication apparatus. The method includes: A mobility management function network element AMF receives a first registration request message sent by a terminal device UE via a first non-3GPP network device, and when determining that the UE needs to be relocated to a second non-3GPP network device, sends a first NAS message to the UE, to indicate the UE to re-access a network via the second non-3GPP network device, where the first NAS message includes identification information of the second non-3GPP network device. Further, the AMF receives a second NAS message from the UE, and generates a first key based on a first key generation parameter carried in the second NAS message, to establish a secure connection between the second non-3GPP network device and the terminal device. This ensures that keys used by the UE to re-access different non-3GPP network devices are different, thereby achieving key isolation and improving network communication security.

## Description

This application claims priority to Chinese Patent Application No. 202211215255.0, filed with the China National Intellectual Property Administration on September 30, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In a communication system, for example, 5th generation (5th generation, 5G), to ensure network security, a primary authentication (primary authentication) procedure needs to be performed on a terminal device that accesses a network, that is, identity authentication and authorization are performed on the terminal device. Only after authentication on the terminal device succeeds, the terminal device can access a non-3rd generation partnership project (3rd generation partnership project, 3GPP) network, and further request to establish a protocol data unit (protocol data unit, PDU) session to access various services on a data network (data network, DN).

For example, in a non-3GPP access technology, user equipment (user equipment, UE) may select, according to an existing rule, a non-3GPP network device to access the network. To resolve a problem of reallocation of the non-3GPP network device, an access and mobility management function (access and mobility management function, AMF) may distribute a same key to a plurality of different non-3GPP network devices, which violates a security principle. As a result, the terminal device and the non-3GPP network device face more potential security risks, for example, hacker attacks, sensitive information leakage, or malicious monitoring or tampering of running statuses. Therefore, how to ensure network communication security is an urgent problem to be resolved.

### SUMMARY

This application provides a communication method and a communication apparatus, to ensure network communication security and improve user experience.

According to a first aspect, a communication method is provided. The method may be performed by an AMF, or may be performed by a chip or a circuit used for the AMF. This is not limited in this application. For ease of description, that the method is performed by the AMF is used as an example for description.

The method includes: A mobility management function network element AMF receives a first registration request message sent by a terminal device via a first non-3GPP network device, where the first registration request message includes first identification information of the terminal device, and the first registration request message is used to request to access a network; when determining that the terminal device needs to be relocated to a second non-3GPP network device, the AMF sends a first NAS message to the terminal device, where the first NAS message includes identification information of the second non-3GPP network device, and the first NAS message indicates the terminal device to re-access the network via the second non-3GPP network device; the AMF receives a second NAS message from the terminal device, where the second NAS message is used by the terminal device to request to access the network, and the second NAS message includes a first key generation parameter; and the AMF generates a first key based on the first key generation parameter, where the first key is used to establish a secure connection between the second non-3GPP network device and the terminal device.

According to the solution provided in this application, the AMF receives the first registration request message sent by the UE via the first non-3GPP network device, and when determining that the UE needs to be relocated to the second non-3GPP network device, sends the first NAS message to the UE. Further, the AMF receives the second NAS message from the UE, and generates the first key based on the first key generation parameter carried in the second NAS message, to establish the secure connection between the second non-3GPP network device and the terminal device. The first key is different from a key used by the UE in a first registration request process. In other words, it is ensured that keys used by the UE when the UE accesses the first non-3GPP network device and the second non-3GPP network device are different, thereby achieving key isolation and improving network communication security.

With reference to the first aspect, in some implementations of the first aspect, that the AMF generates a first key based on the first key generation parameter includes: The AMF obtains an uplink NAS COUNT value based on the first key generation parameter; and the AMF calculates the first key by using a root key and the uplink NAS COUNT value as input parameters, where the root key is a key used to generate a NAS security context between the AMF and the UE.

For example, the AMF obtains, based on the first key generation parameter (for example, a NAS SQN carried in the second NAS message), a NAS COUNT value used to generate a second key, and then calculates a first key by using a root key K_{AMF} and the NAS COUNT value as input parameters.

With reference to the first aspect, in some implementations of the first aspect, before the AMF sends the first NAS message to the terminal device, the AMF determines whether to relocate the terminal device to the second non-3GPP network device.

With reference to the first aspect, in some implementations of the first aspect, the first registration request message further includes information about a slice requested by the terminal device for access, and that the AMF determines whether to relocate the terminal device to the second non-3GPP network device includes: The AMF determines, based on the information about the slice requested by the terminal device for access, whether to relocate the terminal device to the second non-3GPP network device; or the AMF determines, based on location information of the first non-3GPP network device, whether to relocate the terminal device to the second non-3GPP network device; or the AMF determines, based on local pre-configuration information, whether to relocate the terminal device to the second non-3GPP network device.

Based on the foregoing solution, the AMF may determine, in a targeted manner based on the information about the slice requested by the terminal device for access during registration, the location information of the first non-3 GPP network device, the local pre-configuration information, or the like, whether to relocate the terminal device to the second non-3GPP network device through a plurality of considerations, thereby ensuring necessity and effectiveness of relocation of the terminal device, and improving user experience.

With reference to the first aspect, in some implementations of the first aspect, the identification information of the second non-3GPP network device includes internet protocol (internet protocol, IP) address information of the second non-3GPP network device or fully qualified domain name (fully qualified domain name, FQDN) information of the second non-3GPP network device.

With reference to the first aspect, in some implementations of the first aspect, the first NAS message further includes a first cause value; and the first cause value indicates the terminal device to re-access the network via the second non-3GPP network device.

Based on the foregoing solution, the terminal device may determine the second non-3GPP network device based on the identification information of the second non-3GPP network device, and/or determine, based on the first cause value of the terminal device, that the terminal device needs to be relocated to the second non-3GPP network device, to send the second NAS message, so that the AMF generates the first key based on the second NAS message. In other words, when the UE needs to access the network via the second non-3GPP network device, key isolation can be implemented, thereby ensuring network communication security.

With reference to the first aspect, in some implementations of the first aspect, the first NAS message is any one of the following messages: a relocation request message, a downlink NAS transport message, a configuration update command message, a registration reject message, or a registration complete message.

Based on the foregoing solution, signaling interaction between the AMF and the UE is a NAS message, that is, a key is generated based on a NAS COUNT value obtained based on the NAS message, so that keys generated based on different NAS messages are different, thereby achieving key isolation and ensuring a security principle of network communication.

With reference to the first aspect, in some implementations of the first aspect, before the AMF generates the first key based on the first key generation parameter, the AMF determines whether the second NAS message is sent via the second non-3GPP network device.

For example, the AMF determines, based on whether information about a non-3GPP network device via which the second NAS message is sent is the same as information that is about the second non-3GPP network device and that is locally stored in the AMF, whether the second NAS message is sent via the second non-3GPP network device.

With reference to the first aspect, in some implementations of the first aspect, when determining that the second NAS message is received via the second non-3GPP network device, the AMF generates the first key based on the first key generation parameter.

Based on the foregoing solution, only when determining that the second NAS message is received via the second non-3GPP network device, the AMF generates the first key. This can effectively ensure that the UE is relocated to the second non-3GPP network device, thereby ensuring subsequent security of the first key.

With reference to the first aspect, in some implementations of the first aspect, the AMF determines whether the AMF has relocated another non-3GPP network device for the first terminal device; and the AMF generates a first key based on the first key generation parameter includes: when determining that the AMF has relocated another non-3GPP network device for the first terminal device, the AMF generates the first key based on the first key generation parameter.

Based on the foregoing solution, the AMF may generate the first key provided that the AMF determines that the non-3GPP network device has been relocated for the UE. This omits the foregoing action of determining whether the second NAS message is sent via the second non-3 GPP network device, thereby improving network access efficiency of the UE and improving user experience.

With reference to the first aspect, in some implementations of the first aspect, before the AMF sends the first NAS message to the terminal device, the AMF receives a third NAS message sent by the terminal device via the first non-3GPP network device, where the third NAS message includes a second key generation parameter; the AMF generates a second key based on the second key generation parameter, where the second key is used to establish a secure connection between the first non-3GPP network device and the terminal device; and when determining that the secure connection between the first non-3GPP network device and the terminal device has been established, the AMF sends a first registration complete message or a first registration reject message to the terminal device in response to the first registration request message, where the first registration complete message and the first registration reject message include a first 5G globally unique temporary identity 5G-GUTI.

Based on the foregoing solution, before the AMF delivers, to the terminal device, the first NAS message indicating that the terminal device needs to be relocated to the second non-3GPP network device, the AMF needs to perform a complete registration procedure, so that the secure connection is established between the first non-3GPP network device and the UE. Further, subsequent signaling interaction between the UE and the AMF, for example, the first NAS message and the second NAS message, is security-protected, so that security of network communication can be ensured.

With reference to the first aspect, in some implementations of the first aspect, before the AMF sends the first NAS message to the terminal device, the AMF receives a third NAS message sent by the terminal device via the first non-3GPP network device, where the third NAS message includes a second key generation parameter; the AMF generates a second key based on the second key generation parameter, where the second key is used to establish security between the first non-3GPP network device and the terminal device; and after the AMF sends the first NAS message to the terminal device, and before the AMF receives the second NAS message from the terminal device, the AMF sends the second key to the first non-3GPP network device; and when determining that a secure connection between the first non-3GPP network device and the terminal device has been established, the AMF sends a first registration complete message or a first registration reject message to the terminal device in response to the first registration request message, where the first registration complete message and the first registration reject message include a first 5G-GUTI.

It should be understood that, in this implementation, the UE needs to establish an IPsec SA secure connection to the first non-3GPP network device, to ensure secure transmission of the NAS message. Based on the foregoing solution, the procedure in which the UE needs to be relocated to the second non-3GPP network device is completed in a first registration procedure, so that the UE can immediately re-access the network via the second non-3GPP network device after completing the first registration. This helps improve network access efficiency of the UE, avoid a subsequent security authentication procedure, and reduce signaling overheads.

With reference to the first aspect, in some implementations of the first aspect, before the AMF sends the first NAS message to the terminal device, the AMF receives a third NAS message sent by the terminal device via the first non-3GPP network device, where the third NAS message includes a second key generation parameter; the AMF generates a second key based on the second key generation parameter, where the second key is used to establish a secure connection between the first non-3GPP network device and the terminal device; the AMF sends the second key to the first non-3 GPP network device; and that the AMF sends a first NAS message to the terminal device includes: when determining that the secure connection between the first non-3GPP network device and the terminal device has been established, the AMF sends the first NAS message to the terminal device in response to the first registration request message, where the first NAS message is a first registration complete message or a first registration reject message, and the first registration complete message and the first registration reject message include a first 5G-GUTI.

It should be understood that, in this implementation, the UE needs to establish an IPsec SA secure connection to the first non-3GPP network device, to ensure secure transmission of the NAS message. Based on the foregoing solution, the procedure in which the UE needs to be relocated to the second non-3GPP network device is completed in the first registration procedure, so that the UE can immediately re-access the network via the second non-3GPP network device after completing the first registration. This helps improve network access efficiency of the UE, avoid a subsequent security authentication procedure, and reduce signaling overheads. In addition, in this implementation, the registration reject message or the registration complete message in response to the first registration request message may be reused, so that signaling overheads are reduced, and no additional NAS message needs to be added.

With reference to the first aspect, in some implementations of the first aspect, before the AMF receives the second NAS message from the terminal device, the AMF triggers a NAS security activation procedure; when determining that NAS security between the AMF and the terminal device is activated, the AMF sends a first registration reject message to the terminal device in response to the first registration request message, where the first registration reject message is the first NAS message, the first NAS message is the first registration reject message, and the first registration reject message includes a first 5G-GUTI; and the AMF locally stores the NAS security context of the terminal device, where the NAS security context is used to protect the second NAS message.

It should be understood that, in this implementation, the IPsec SA secure connection does not need to be established between the UE and the first non-3GPP network device. This is because only the registration reject message is sent, but after the registration reject message is sent or received, the AMF and the UE do not need to delete the local NAS security context, so that an authentication action does not need to be repeatedly performed in a subsequent relocation process, thereby reducing signaling overheads. In addition, based on the NAS security activation between the AMF and the terminal device, authenticity of information that is carried in the registration reject message and that indicates the UE to be relocated to the second non-3GPP network device can be ensured, to ensure secure transmission of the NAS message.

According to a second aspect, a communication method is provided. The method may be performed by a terminal device (for example, user equipment (user equipment, UE)), or may be performed by a chip or a circuit used for UE. This is not limited in this application. For ease of description, that the method is performed by the UE is used as an example for description.

The method includes: A terminal device sends a first registration request message to a mobility management function AMF via a first non-3GPP network device, where the first registration request message includes first identification information of the terminal device, and the first registration request message is used to request to access a network; the terminal device receives a first NAS message from the AMF, where the first NAS message includes identification information of a second non-3GPP network device, and the first NAS message indicates the terminal device to re-access the network via the second non-3GPP network device; the terminal device sends a second NAS message to the AMF via the second non-3GPP network device, where the second NAS message is used by the terminal device to request to access the network, and the second NAS message includes a first key generation parameter; and the terminal device generates a first key based on the first key generation parameter, where the first key is used to establish a secure connection between the second non-3GPP network device and the terminal device.

According to the solution provided in this application, the UE sends the first registration request message to the AMF via the first non-3GPP network device, and when determining that the UE needs to be relocated to the second non-3GPP network device, receives the first NAS message sent by the AMF. Further, the UE sends the second NAS message to the AMF, and generates the first key based on the first key generation parameter carried in the second NAS message, to establish the secure connection between the second non-3GPP network device and the terminal device. The first key is different from a key used by the UE in a first registration request process. In other words, it is ensured that keys used by the UE when the UE accesses the first non-3GPP network device and the second non-3GPP network device are different, thereby achieving key isolation and improving network communication security.

For example, the UE obtains, based on the first key generation parameter (for example, a NAS SQN carried in the second NAS message), a NAS COUNT value used to generate a second key, and then calculates a first key by using a root key K_{AMF} and the NAS COUNT value as input parameters.

With reference to the second aspect, in some implementations of the second aspect, the identification information of the second non-3GPP network device includes internet protocol IP address information of the second non-3GPP network device or fully qualified domain name FQDN information of the second non-3GPP network device.

With reference to the second aspect, in some implementations of the second aspect, before the terminal device sends the second NAS message to the AMF, the terminal device determines, based on the first NAS message, that the terminal device needs to re-access the network via the second non-3GPP network device.

With reference to the second aspect, in some implementations of the second aspect, that the terminal device determines, based on the first NAS message, that the terminal device needs to re-access the network via the second non-3GPP network device includes: The terminal device determines, based on the identification information of the second non-3GPP network device, that the terminal device needs to re-access the network via the second non-3GPP network device; or the terminal device determines, according to a local policy or a preset value method, that the terminal device needs to re-access or immediately access the network via the second non-3GPP network device.

Based on the foregoing solution, the terminal device may determine, based on the identification information of the second non-3GPP network device, the local policy, or the preset value method, that the terminal device needs to re-access or immediately access the network via the second non-3GPP network device. Necessity and effectiveness of relocation of the terminal device can be ensured through a plurality of considerations, thereby improving user experience.

With reference to the second aspect, in some implementations of the second aspect, the first NAS message further includes a first cause value, and the first cause value indicates that the terminal device needs to re-access the network via the second non-3GPP network device; and the terminal device determines, based on the first NAS message, that the terminal device needs to re-access the network via the second non-3GPP network device includes: The terminal device determines, based on the first cause value, that the terminal device needs to re-access the network based on the FQDN information of the second non-3GPP network device; or the terminal device determines the second non-3GPP network device based on the FQDN information of the second non-3GPP network device, and the terminal device determines, based on the first cause value, that the terminal device needs to access or immediately access the network via the second non-3GPP network device.

Based on the foregoing solution, the terminal device may determine the second non-3GPP network device based on the identification information of the second non-3GPP network device, and/or determine, based on the first cause value of the terminal device, that the terminal device needs to be relocated to the second non-3GPP network device, to send the second NAS message, so that the AMF generates the first key based on the second NAS message. In other words, when the UE needs to access the network via the second non-3GPP network device, key isolation can be implemented, thereby ensuring network communication security.

With reference to the second aspect, in some implementations of the second aspect, the first NAS message is any one of the following messages: a relocation request message, a downlink NAS transport message, a configuration update command message, a registration complete message, or a registration reject message.

Based on the foregoing solution, signaling interaction between the AMF and the UE is a NAS message, that is, a key is generated based on a NAS COUNT value obtained based on the NAS message, so that keys generated based on different NAS messages are different, thereby achieving key isolation and ensuring a security principle of network communication.

With reference to the second aspect, in some implementations of the second aspect, before the terminal device receives the first NAS message from the AMF, the terminal device sends a third NAS message to the AMF via the first non-3GPP network device, where the third NAS message includes a second key generation parameter; and the terminal device generates a second key based on the second key generation parameter, where the second key is used to establish a secure connection between the first non-3GPP network device and the terminal device.

Further, when determining that the secure connection between the first non-3GPP network device and the terminal device has been established, the terminal device receives a first registration complete message or a first registration reject message from the AMF in response to the first registration request message, where the first registration complete message and the first registration reject message include a first 5G-GUTI.

Based on the foregoing solution, before the AMF delivers, to the terminal device, the first NAS message indicating that the terminal device needs to be relocated to the second non-3GPP network device, the AMF needs to perform a complete registration procedure, so that the secure connection is established between the first non-3GPP network device and the UE. Further, subsequent signaling interaction between the UE and the AMF, for example, the first NAS message and the second NAS message, is security-protected, so that security of network communication can be ensured.

With reference to the second aspect, in some implementations of the second aspect, before the terminal device receives the first NAS message from the AMF, the terminal device sends a third NAS message to the AMF via the first non-3GPP network device, where the third NAS message includes a second key generation parameter; the terminal device generates a second key based on the second key generation parameter, where the second key is used to establish a secure connection between the first non-3GPP network device and the terminal device; and after the terminal device receives the first NAS message from the AMF, and before the terminal device sends the second NAS message to the AMF via the second non-3GPP network device, when determining that the secure connection between the first non-3GPP network device and the terminal device has been established, the terminal device receives a first registration complete message or a first registration reject message from the AMF in response to the first registration request message, where the first registration complete message and the first registration reject message include a first 5G-GUTI.

It should be understood that, in this implementation, the UE needs to establish an IPsec SA secure connection to the first non-3GPP network device, to ensure secure transmission of the NAS message. Based on the foregoing solution, the procedure in which the UE needs to be relocated to the second non-3GPP network device is completed in a first registration procedure, so that the UE can immediately re-access the network via the second non-3GPP network device after completing the first registration. This helps improve network access efficiency of the UE, avoid a subsequent security authentication procedure, and reduce signaling overheads.

With reference to the second aspect, in some implementations of the second aspect, before the terminal device receives the first NAS message from the AMF, the terminal device sends a third NAS message to the AMF via the first non-3GPP network device, where the third NAS message includes a second key generation parameter; the terminal device generates a second key based on the second key generation parameter, where the second key is used to establish a secure connection between the first non-3GPP network device and the terminal device; the terminal device establishes the secure connection to the first non-3GPP network device based on the second key and identification information of the first non-3GPP network device; and that the terminal device receives a first NAS message from the AMF includes: when determining that the secure connection between the first non-3GPP network device and the terminal device has been established, the terminal device receives the first NAS message from the AMF in response to the first registration request message, where the first NAS message is a first registration complete message or a first registration reject message, and the first registration complete message and the first registration reject message include a first 5G-GUTI.

It should be understood that, in this implementation, the UE needs to establish an IPsec SA secure connection to the first non-3GPP network device, to ensure secure transmission of the NAS message. Based on the foregoing solution, the procedure in which the UE needs to be relocated to the second non-3GPP network device is completed in the first registration procedure, so that the UE can immediately re-access the network via the second non-3GPP network device after completing the first registration. This helps improve network access efficiency of the UE, avoid a subsequent security authentication procedure, and reduce signaling overheads. In addition, in this implementation, the registration reject message or the registration complete message in response to the first registration request message may be reused, so that signaling overheads are reduced, and no additional NAS message needs to be added.

With reference to the second aspect, in some implementations of the second aspect, after the terminal device receives the first registration reject message from the AMF, the terminal device locally stores the NAS security context of the terminal device, where the NAS security context is used to protect the second NAS message.

With reference to the second aspect, in some implementations of the second aspect, before the terminal device sends the second NAS message to the AMF via the second non-3GPP network device, when determining that NAS security between the terminal device and the AMF is activated, the terminal device receives the first registration reject message from the AMF in response to the first registration request message, where the first registration reject message is the first NAS message, and the first registration reject message includes a first 5G-GUTI; and the terminal device locally stores the NAS security context of the terminal device, where the NAS security context is used to protect the second NAS message.

It should be understood that, in this implementation, the IPsec SA secure connection does not need to be established between the UE and the first non-3GPP network device. This is because only the registration reject message is sent, but after the registration reject message is sent or received, the AMF and the UE do not need to delete the local NAS security context, so that an authentication action does not need to be repeatedly performed in a subsequent relocation process, thereby reducing signaling overheads. In addition, based on the NAS security activation between the AMF and the terminal device, authenticity of information that is carried in the registration reject message and that indicates the UE to be relocated to the second non-3GPP network device can be ensured, to ensure secure transmission of the NAS message.

According to a third aspect, a terminal device is provided. The device includes a transceiver unit and a processing unit. The transceiver unit is configured to receive a first registration request message sent by a terminal device via a first non-3GPP network device, where the first registration request message includes first identification information of the terminal device, and the first registration request message is used to request to access a network. When the processing unit determines that the terminal device needs to be relocated to a second non-3GPP network device, the transceiver unit is further configured to send a first NAS message to the terminal device, where the first NAS message includes identification information of the second non-3 GPP network device, and the first NAS message indicates the terminal device to re-access the network via the second non-3GPP network device. The transceiver unit is further configured to receive a second NAS message from the terminal device, where the second NAS message is used by the terminal device to request to access the network, and the second NAS message includes a first key generation parameter. The processing unit is further configured to generate a first key based on the first key generation parameter, where the first key is used to establish a secure connection between the second non-3GPP network device and the terminal device.

The transceiver unit may perform receiving and sending in the first aspect, and the processing unit may perform processing other than receiving and sending in the first aspect.

According to a fourth aspect, an AMF is provided. The device includes a transceiver unit and a processing unit. The transceiver unit is configured to send a first registration request message to a mobility management function network element AMF via a first non-3GPP network device, where the first registration request message includes first identification information of a terminal device, and the first registration request message is used to request to access a network. The transceiver unit is further configured to receive a first NAS message from the AMF, where the first NAS message includes identification information of a second non-3GPP network device, and the first NAS message indicates the terminal device to re-access the network via the second non-3GPP network device. When the processing unit determines that the terminal device needs to re-access the network via the second non-3GPP network device, the transceiver unit is further configured to send a second NAS message to the AMF, where the second NAS message is used by the terminal device to request to access the network, and the second NAS message includes a first key generation parameter.

The transceiver unit may perform receiving and sending in the second aspect, and the processing unit may perform processing other than receiving and sending in the second aspect.

According to a fifth aspect, a communication apparatus is provided, including a transceiver, a processor, and a memory. The processor is configured to control the transceiver to send and receive a signal. The memory is configured to store a computer program. The processor is configured to invoke the computer program from the memory and run the computer program, to enable the communication apparatus to perform the method in the first aspect or the second aspect and any possible implementation of the first aspect or the second aspect.

Optionally, there are one or more processors, and there are one or more memories.

Optionally, the memory may be integrated with the processor, or the memory and the processor are separately disposed.

Optionally, the communication apparatus further includes a transmitter machine (transmitter) and a receiver machine (receiver).

According to a sixth aspect, a communication system is provided, including UE and an AMF.

According to a seventh aspect, this application provides a computer-readable storage medium. The computer-readable storage medium stores a computer program or code. When the computer program or code is run on a computer, the computer is enabled to perform the method in the first aspect or the second aspect and any possible implementation of the first aspect or the second aspect.

According to an eighth aspect, a chip is provided, including at least one processor. The at least one processor is coupled to a memory, the memory is configured to store a computer program, and the processor is configured to invoke the computer program from the memory and run the computer program, to enable a communication apparatus on which the chip system is installed to perform the method in the first aspect or the second aspect and any possible implementation of the first aspect or the second aspect.

The chip may include an input circuit or interface configured to send information or data and an output circuit or interface configured to receive information or data.

According to a ninth aspect, a computer program product is provided. The computer program product includes computer program code. When the computer program code is run by a communication apparatus, the communication apparatus is enabled to perform the method in the first aspect or the second aspect and any possible implementation of the first aspect or the second aspect.

### BRIEF DESCRIPTION OF DRAWINGS

FIG. 1 is a diagram of a network architecture according to this application;
FIG. 2 is a diagram of an untrusted non-3GPP system architecture 200 according to this application;
FIG. 3 is a diagram of a trusted non-3GPP system architecture 300 according to this application;
FIG. 4 is an example flowchart of untrusted non-3GPP registration 400 according to this application;
FIG. 5 is an example flowchart of trusted non-3GPP registration 500 according to this application;
FIG. 6 is an example flowchart of TNGF relocation 600 according to this application;
FIG. 7 is an example flowchart of a communication method 700 according to an embodiment of this application;
FIG. 8 is an example flowchart of a communication method 800 according to an embodiment of this application;
FIG. 9 is an example flowchart of a communication method 900 according to an embodiment of this application;
FIG. 10 is an example flowchart of a communication method 1000 according to an embodiment of this application;
FIG. 11 is a diagram of a structure of a communication apparatus 1200 according to an embodiment of this application; and
FIG. 12 is a diagram of a structure of a communication apparatus 2000 according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application can be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a network operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network that meets a requirement of a 3GPP standard, and is referred to as a 3GPP network for short. The 3GPP network usually includes but is not limited to a 5G network, a 4th-generation (4th-generation, 4G) mobile communication network, and another future communication system, for example, a 6th-generation (6th-generation, 6G) network.

For ease of description, the PLMN or the 5G network is used as an example for description in embodiments of this application.

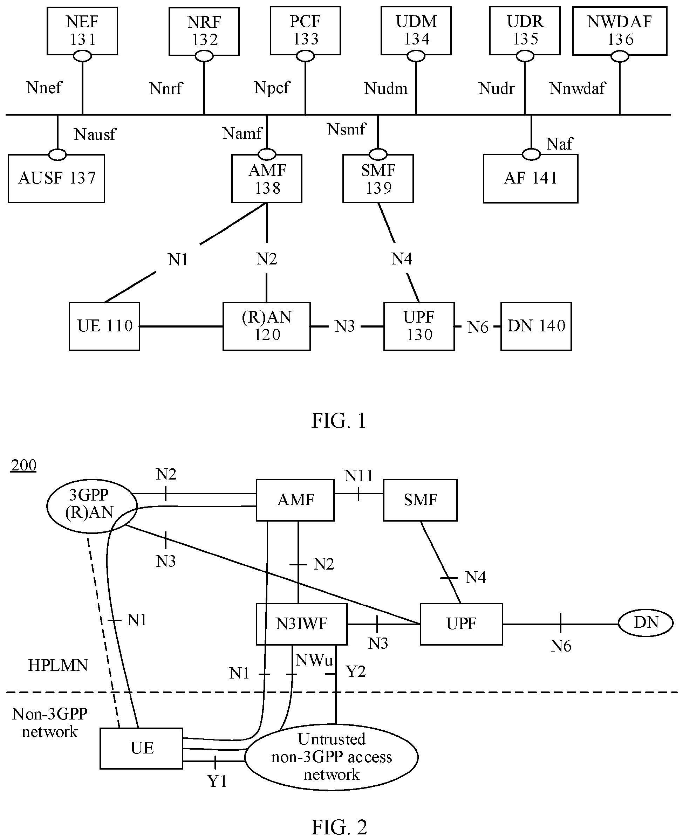

FIG. 1 is a diagram of a network architecture according to this application. A 5G network architecture based on a service-based architecture SBA in a non-roaming scenario defined in a 3GPP standardization process is used as an example. As shown in the figure, the network architecture may include three parts: a terminal device part, a DN, and an operator network PLMN part. The following briefly describes a function of a network element of each part.

The terminal device part may include a terminal device 110, and the terminal device 110 may also be referred to as user equipment (user equipment, UE). The terminal device 110 in this application is a device having wireless sending and receiving functions, and may communicate with one or more core network (core network, CN) devices via an access network device (which may alternatively be referred to as an access device) in a radio access network (radio access network, RAN) 140. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, including an indoor, outdoor, handheld, or vehicle-mounted device; may be deployed on the water (for example, a ship); or may be deployed in the air (for example, on aircraft, a balloon, or a satellite). The terminal device 110 may be a cellular phone (cellular phone), a cordless telephone set, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in an internet of things or an internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device herein is a 3GPP terminal. A type, a category, or the like of the terminal device is not limited in embodiments of this application. For ease of description, in this application, an example in which UE represents a terminal device is used for description below.

The operator network PLMN part may include but is not limited to a (radio) access network ((radio) access network, (R)AN) 120 and a core network (core network, CN) part.

The (R)AN 120 may be considered as a sub-network of an operator network, and is an implementation system between a service node in the operator network and the terminal device 110. To access the operator network, the terminal device 110 first passes through the (R)AN 120, and then may be connected to the service node in the operator network through the (R)AN 120. An access network device (RAN device) in embodiments of this application is a device that provides a wireless communication function for the terminal device 110, and may also be referred to as a network device. The RAN device includes but is not limited to a next generation NodeB (next generation NodeB, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission and reception point (transmitting and receiving point, TRP), a transmission point (transmitting point, TP), a small cell base station device (pico), a mobile switching center, a network device in a future network, or the like. In systems using different radio access technologies, devices with functions of the access network device may have different names. For ease of description, in all embodiments of this application, the foregoing apparatuses that provide a wireless communication function for the terminal device 110 are collectively referred to as an access network device, or referred to as a RAN or an AN for short. It should be understood that a specific type of the access network device is not limited in this specification.

The CN part may include but is not limited to the following network functions (Network Functions, NFs): a user plane function (user plane function, UPF) 130, a network exposure function (network exposure function, NEF) 131, a network repository function (network repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (Authentication Server Function, AUSF) 137, an access and mobility management function (access and mobility management function, AMF) 138, and a session management function (session management function, SMF) 139.

The data network DN 140 may also be referred to as a packet data network (packet data network, PDN), and is usually a network located outside the operator network, for example, a third-party network. Certainly, in some implementations, the DN may be alternatively deployed by an operator, that is, the DN belongs to a part of the PLMN. Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, a sensor installed in a workshop of the smart factory may be the terminal device 110, a control server of the sensor is deployed in the data network DN 140, and the control server may provide a service for the sensor. The sensor may communicate with the control server, to obtain instructions of the control server, transmit collected sensor data to the control server according to the instructions, and the like. For another example, the data network DN 140 may be an internal office network of a company, a mobile phone or a computer of an employee of the company may be the terminal device 110, and the mobile phone or the computer of the employee may access information, data resources, and the like in the internal office network of the company. The terminal device 110 may establish a connection to the operator network through an interface (for example, N1) provided by the operator network, and use the data service, the voice service, and/or the like provided by the operator network. The terminal device 110 may further access the data network DN 140 through the operator network, and use an operator service deployed in the data network DN 140 and/or a service provided by a third party.

The following further briefly describes NF functions included in the CN.
1. The UPF 130 is a gateway provided by an operator, and is a gateway for communication between the operator network and the data network DN 140. The UPF network function 130 includes user plane-related functions such as data packet routing and transmission, data packet detection, traffic usage reporting, quality of service (quality of service, QoS) handling, lawful interception, uplink data packet detection, and downlink data packet storage.
2. The NEF 131 is a control plane function provided by an operator, and is mainly used to enable a third party to use a service provided by a network, support the network in opening a capability, an event, and data analysis of the network, convert security configuration information from an external application to a PLMN and exchange information inside and outside the PLMN, provide an API interface opened by the operator network to outside, provide interaction between an external server and an internal operator network, and the like.
3. The NRF 132 is a control plane function provided by an operator, and may be configured to maintain real-time information of a network function and a service in a network. For example, the NRF 132 supports network service discovery, maintains services supported by NF configuration data (an NF profile) of NF instances, supports service discovery of a service communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. The PCF 133 is a control plane function provided by an operator, and supports a unified policy framework to govern network behavior and provide subscription information related to a policy rule and policy decision for another control function.
5. The UDM 134 is a control plane function provided by an operator, and is responsible for storage of a subscription permanent identifier (subscription permanent identifier, SUPI) of a subscriber of an operator network, a generic public subscription identifier (generic public subscription identifier, GPSI) of the subscriber, a credential (credential), and other information. The SUPI is first encrypted in a transmission process, and an encrypted SUPI is referred to as a subscription concealed identifier (subscription concealed identifier, SUCI). The information stored in the UDM network function 134 may be used for authentication and authorization for accessing the operator network by the terminal device 110. The subscriber of the operator network may be specifically a user using a service provided by the operator network, for example, a user using a subscriber identity module (subscriber identity module, SIM) card of China Telecom, or a user using a SIM card of China Mobile. The credential of the subscriber may be a long-term key stored in the SIM card, or a stored small file, for example, information related to encryption of the SIM card, and is used for authentication and/or authorization. It should be noted that for ease of description, information such as the permanent identifier, the credential, a security context, authentication data (cookie), and a token related to verification/authentication and authorization is not limited or distinguished in embodiments of this application.
6. The UDR 135 is a control plane function provided by an operator, and provides a function of storing and obtaining subscription data for a UDM, provides a function of storing and obtaining policy data for a PCF, stores and obtains NF group ID (group ID) information of a user, and the like.
7. The NWDAF 136 is a control plane function provided by an operator. A main function of the NWDAF 136 is to collect data from an NF, an external application function AF, an operations, administration and maintenance (operations, administration and maintenance, OAM) system, and the like, and provide the NF and the AF with NWDAF service registration, data exposure, data analysis, and the like.
8. The AUSF 137 is a control plane function provided by an operator, and is usually used for primary authentication, namely, authentication between the terminal device 110 (subscriber) and an operator network. After receiving an authentication request initiated by the subscriber, the AUSF network function 137 may perform authentication and/or authorization on the subscriber by using authentication information and/or authorization information stored in the UDM network function 134, or generate authentication information and/or authorization information of the subscriber by using the UDM network function 134. The AUSF network function 137 may feed back the authentication information and/or the authorization information to the subscriber.
9. The AMF 138 is a control plane network function provided by an operator network, and is responsible for access control and mobility management when the terminal device 110 accesses the operator network, for example, including functions such as mobility status management, allocation of a temporary user identity, and user authentication and authorization.
   The AMF 138 is configured to perform a NAS connection to UE, and has a same 5G NAS security context with the UE. The 5G NAS security context includes K_{AMF}, a NAS hierarchy key, key identification information same as the 5G NAS security context, a UE security capability, and uplink and downlink NAS COUNT values. The NAS hierarchy key includes a NAS encryption key and a NAS integrity protection key that are used for confidentiality protection of a NAS message and integrity protection of the NAS message, respectively.
10. The SMF 139 is a control plane network function provided by an operator network, and is responsible for managing a PDU session of the terminal device 110. The PDU session is a channel for transmitting a PDU, and the terminal device and the data network DN 140 need to transmit PDUs to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.
11. The AF 141 is a control plane network function provided by an operator network, and is configured to provide application layer information. The AF 141 may interact with a policy framework through a network exposure function network element, or directly interact with the policy framework to make a policy decision request, or the like. The AF 141 can be located inside or outside the operator network.

It may be understood that the foregoing network elements or functions may be physical entities in a hardware device, software instances running on dedicated hardware, or virtualized functions instantiated on a sharing platform (for example, a cloud platform). In short, an NF may be implemented by hardware or software.

In FIG. 1, Nnef, Nnrf, Npcf, Nudm, Nudr, Nnwdaf, Nausf, Namf, Nsmf, N1, N2, N3, N4, and N6 are interface sequence numbers. For example, for meanings of the interface serial numbers, refer to meanings defined in the 3GPP standard protocol. The meanings of the interface serial numbers are not limited in this application. It should be noted that interface names between the network functions in the figure are merely examples. During specific implementation, the interface names of the system architecture may be alternatively other names. This is not limited in this application. In addition, names of messages (or signaling) transmitted between the foregoing network elements are merely examples, and do not constitute any limitation on functions of the messages.

For ease of description, in embodiments of this application, a network function (such as the NEF 131, ..., and the SMF 139) is collectively/briefly referred to as an NF. In other words, the NF described below in embodiments of this application may be replaced with any network function. In addition, FIG. 1 describes only some network functions as an example, and the NF described below is not limited to the network functions shown in FIG. 1.

It should be understood that the foregoing network architecture applied to embodiments of this application is merely a network architecture described from a perspective of a service-based architecture, and a network architecture applicable to embodiments of this application is not limited thereto. Any network architecture that can implement functions of the foregoing network elements is applicable to embodiments of this application.

It should be further understood that the AMF, the SMF, the UPF, the NEF, the AUSF, the NRF, the PCF, and the UDM shown in the figure may be understood as network elements configured to implement different functions in a core network, for example, may be combined as required to form a network slice. These core network elements may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in the 6G network, some or all of the foregoing network elements may still use terms in 5G, or may use other names.

It should be understood that 3GPP access is to access a mobile network by using a 3GPP access technology. The 3GPP access technology includes but is not limited to technologies such as 5G, LTE, and UMTS. Generally, it may be understood that the 3GPP access technology uses access provided by types of base stations such as a gNB or an eNB. Non-3GPP access refers to accessing a network by using a technology other than a 3GPP access technology. The non-3GPP access technology includes but is not limited to technologies such as wireless fidelity (wireless fidelity, Wi-Fi), Bluetooth, or ZigBee (ZigBee). Types of non-3GPP access include an untrusted non-3GPP access (untrusted non-3GPP access) technology and a trusted non-3GPP access (trusted non-3GPP access) technology. For example, in the untrusted non-3GPP access technology, a core network is accessed by using a wireless access node that is deployed by a non-operator, and in the trusted non-3GPP access technology, a core network and a wireline access technology are accessed by using a wireless access node that is deployed by an operator.

A non-3GPP access network device may include but not limited to a non-3GPP interworking function (non-3GPP interworking function, N3IWF), a trusted non-3GPP gateway function (trusted non-3GPP gateway function, TNGF), a trusted non-3GPP access point (trusted non-3GPP access point, TNAP), a trusted wireless local area network interworking function (trusted wireless local area network interworking function, TWIF), and a wireline access gateway function (wireline access gateway function, W-AGF). The W-AGF may also be referred to as an AGF.

For example, if the access technology is an untrusted non-3GPP access technology, a non-3GPP access network device corresponding to the untrusted non-3GPP access technology may include an N3IWF. A network topology structure of the N3IWF is equivalent to a radio access network (radio access network, RAN) in a 3GPP access network, and an N2 interface and an N3 interface may be supported. If the access technology is a trusted non-3GPP access technology, a non-3GPP access network device corresponding to the trusted non-3GPP access technology may include a TNGF. A network topology structure of the TNGF is equivalent to a RAN in a 3GPP access network, and an N2 interface and an N3 interface may be supported.

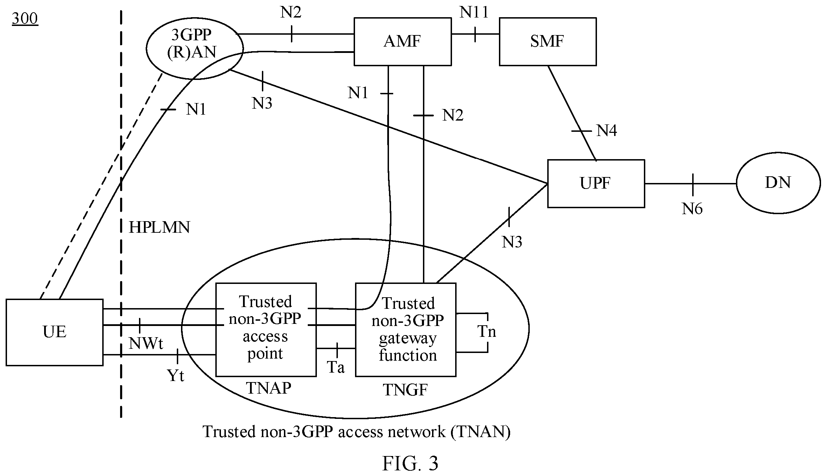

The following describes diagrams of an untrusted non-3GPP system architecture and a trusted non-3GPP system architecture with reference to FIG. 2 and FIG. 3, respectively.

FIG. 2 is a diagram of an untrusted non-3GPP system architecture 200 according to this application. As shown in FIG. 2, the network architecture 200 may include but is not limited to the following network elements (or referred to as function network elements, function entities, nodes, devices, or the like): UE, an N3IWF, a 3GPP (R)AN, a UPF, a DN, an AMF, an SMF, and the like.

For example, the UE may access an untrusted non-3GPP access network device, for example, Wi-Fi, through a Y1 interface. The untrusted non-3GPP access network device may access the N3IWF through a Y2 interface. The N3IWF may be connected to the AMF through an N2 interface, and may be connected to the UPF through an N3 interface. In addition, the UE may also be connected to the AMF by using a 3GPP access technology (for example, an N1 interface). In other words, the UE may access a same AMF or different AMFs by using the 3GPP access technology and a non-3GPP access technology. Alternatively, the UE may access the AMF by using only the 3GPP access technology, or access the AMF by using only a non-3GPP access technology.

The N3IWF may be used to allow interconnection and interworking between a terminal device (for example, the UE) and a 3GPP core network (for example, the AMF) by using the non-3GPP technology. The N3IWF supports communication with a mobility management device through the N2 interface, and supports communication with a user plane device through the N3 interface. In addition, for descriptions of other network element functions, refer to the descriptions of corresponding network element functions in FIG. 1. Details are not described herein again. N1, N2, N3, N4, N6, and N11 are interface sequence numbers. For meanings of these interface sequence numbers, refer to meanings defined in the 3GPP standard protocol. This is not limited herein.

FIG. 3 is a diagram of a trusted non-3GPP system architecture 300 according to this application. As shown in FIG. 3, the network architecture 300 may include but is not limited to the following network elements (or referred to as function network elements, function entities, nodes, devices, or the like): UE, a TNAP, a TNGF, a 3GPP (R)AN, a UPF, a DN, an AMF, an SMF, and the like. The TNAP and the TNGF belong to a trusted non-3GPP access network (trusted non-3GPP access network, TNAN). The TNAP and the TNGF may be connected through a Ta interface, and the TNGF may be connected to the TNGF through a Tn interface.

For example, the UE may access the TNAP through a Yt interface, and access the TNGF through an NWt interface. The TNGF may be connected to the AMF through an N2 interface, and connected to the UPF through an N3 interface. In addition, the UE may also be connected to the AMF by using a 3GPP access technology (for example, an N1 interface). In other words, the UE may access a same AMF or different AMFs by using the 3GPP access technology and a non-3GPP access technology. Alternatively, the UE may access the AMF by using only the 3GPP access technology, or access the AMF by using only a non-3GPP access technology.

The TNAP may be referred to as a trusted non-3GPP access node, and the trusted non-3GPP access point may be an access node deployed by an operator. The TNAP may be configured to: send an authentication, authorization, and accounting (authentication, authorization, and accounting, AAA) message, for example, encapsulate an identity authentication protocol (extensible authentication protocol, EAP) data packet into the AAA message, and interact with the TNGF to forward a NAS message. The TNGF may be configured to support the N2 interface and the N3 interface, may be configured to terminate EAP-5G signaling, and may implement functions such as AMF selection, processing of N2 signaling with the SMF (relayed by the AMF) to support a session and QoS, and a transparent relay PDU between a terminal device and a user plane device. In addition, for descriptions of other network element functions, refer to the descriptions of corresponding network element functions in FIG. 1. Details are not described herein again. N1, N2, N3, N4, N6, and N11 are interface sequence numbers. For meanings of these interface sequence numbers, refer to meanings defined in the 3GPP standard protocol. This is not limited herein.

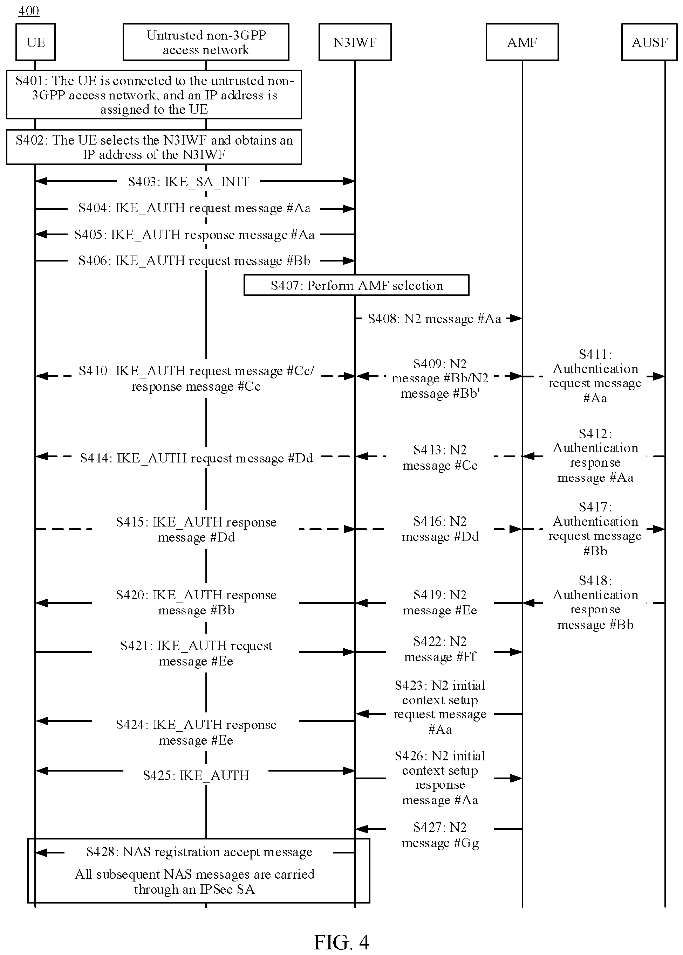

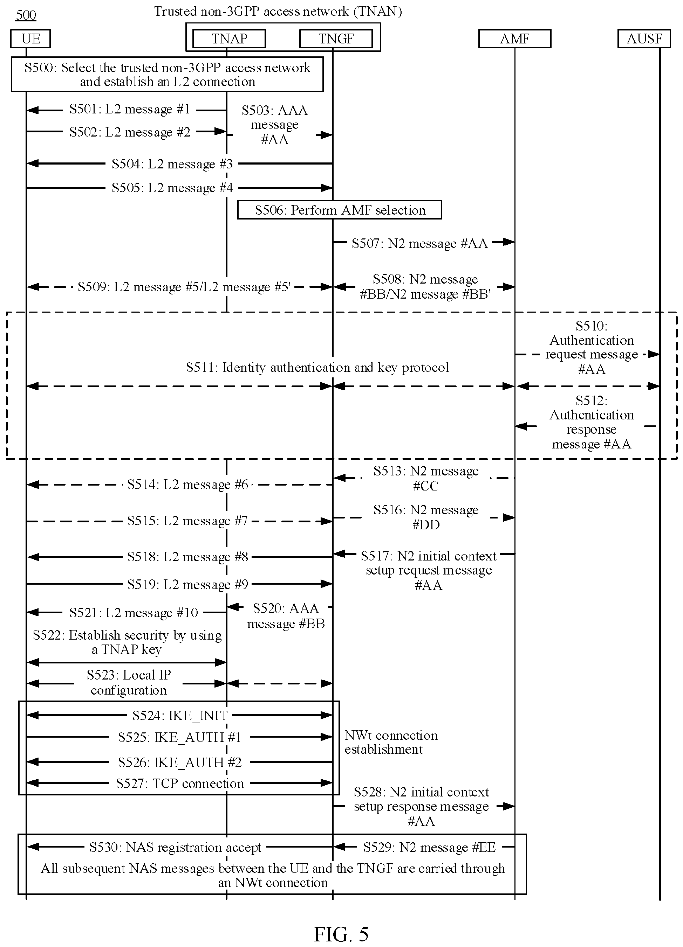

TS 23.501 in the 3GPP standard defines both an untrusted non-3GPP access procedure and a trusted non-3GPP access procedure. With reference to FIG. 4 and FIG. 5, the following specifically describes a registration procedure performed by UE by using a non-3GPP technology.

FIG. 4 is an example flowchart of untrusted non-3GPP registration 400 according to this application. As shown in FIG. 4, the following plurality of steps are included.

S401: UE is connected to an untrusted non-3GPP access network, and an IP address is assigned to the UE.

For example, the UE selects to connect to one Wi-Fi, and enters a password.

S402: The UE selects an N3IWF.

The N3IWF is any network device in the untrusted non-3GPP access network (for example, Wi-Fi).

S403: The UE initiates an internet key exchange (internet key exchange, IKE) protocol to the N3IWF through the untrusted non-3GPP access network to perform initial exchange, to establish an IPsec security association (IPsec SA) with the N3IWF.

It should be noted that security from the non-3GPP access network to a 5G core network is ensured by initiating, by the UE, the IKE initial exchange based on IKEv2 defined in RFC 7296 [25], and continuing to establish the IPsec security association (SA) with the selected N3IWF. After that, all subsequent IKE messages are encrypted and integrity-protected through the IKE SA established in this step.

It should be understood that step S403 is first exchange (referred to as IKE_SA_INIT exchange), and parameter negotiation of the IKE SA is completed in a plaintext manner, including encryption and authentication algorithm negotiation, temporary random number exchange, and DH exchange. After the IKE_SA_INIT exchange, a shared key material is generated. All keys of the IPsec SA can be derived based on the shared key material.

S404: The UE sends an IKE_AUTH request message #Aa to the N3IWF.

Correspondingly, the N3IWF receives the IKE_AUTH request message #Aa from the UE.

In other words, the UE initiates IKE_AUTH exchange by sending the IKE_AUTH request message.

The IKE_AUTH request message #Aa does not include an AUTH payload, which indicates that EAP signaling (EAP-5G signaling in this example) needs to be used in the IKE_AUTH exchange. According to RFC 7296 [25], in an Idi field, the UE needs to set an ID type to ID_KEY-ID in this message and set a value of ID_KEY-ID to any random number. In this step, the UE does not need to use a GUTI/SUCI/SUPI of the UE as the ID.

S405: The N3IWF sends an IKE_AUTH response message #Aa to the UE.

Correspondingly, the UE receives the IKE_AUTH response message #Aa from the N3IWF.

The N3IWF uses the IKE_AUTH response message #Aa as a response to the IKE_AUTH request message #Aa. The IKE_AUTH response message #Aa includes an identifier of the N3IWF, an AUTH payload and an EAP-Request/5G-Start data packet that are protected and that are of a prior message (in the IKE_SA_INIT exchange in step S403) sent by the N3IWF to the UE. The EAP-Request/5G-Start data packet is used to notify the UE to initiate an EAP-5G session, that is, start to send a NAS message encapsulated in the EAP-5G data packet.

Further, after step S405 is performed, the UE needs to verify a certificate of the N3IWF, and determine whether the identifier of the N3IWF matches that of the N3IWF selected by the UE. If the UE fails to request the certificate or perform identity confirmation, a connection between the UE and the N3IWF fails due to lack of the certificate of the N3IWF. In this case, the UE should perform step S406, that is, the UE sends an IKE_AUTH request to the N3IWF.

S406: The UE sends an IKE_AUTH request message #Bb to the N3IWF.

Correspondingly, the N3IWF receives the IKE_AUTH request message #Bb from the UE.

The IKE_AUTH request message #Bb includes an EAP-Response/5G-NAS data packet, and the EAP-Response/5G-NAS data packet includes an AN parameter (for example, AN-params) and a registration request message #Aa (for example, registration request). The AN parameter includes parameter information used by the N3IWF to select an AMF, for example, one or more of a globally unique AMF identifier (globally unique AMF identifier, GUAMI) and a selected PLMN ID (or a PLMN ID and an NID).

It should be noted that if the UE has accessed a 3GPP system before, for example, the UE has accessed and used a 5GC by using a 3GPP technology and an available security context exists, the UE needs to integrity-protect the registration request message #Aa, and may send the registration request message #Aa including a 5G globally unique temporary identity (5G globally unique temporary UE identity, 5G-GUTI) to the AMF. If the UE has not accessed a 3GPP system before, the UE may include a subscription concealed identifier (subscription concealed identifier, SUCI) in the registration request message #Aa.

S407: The N3IWF performs AMF selection.

For example, the N3IWF may determine the AMF based on the AN parameter in step S406. For a specific implementation, refer to related descriptions in the AMF selection and discovery section in the standard TS23.501. For brevity, details are not described herein again.

S408: The N3IWF sends an N2 message #Aa to the AMF.

Correspondingly, the AMF receives the N2 message #Aa from the N3IWF.

The N2 message #Aa includes the registration request message #Aa.

For example, based on the AMF selected in step S407 and the registration request message #Aa in step S406, the N3IWF sends the N2 message #Aa to the AMF, to send the registration request message #Aa to the AMF.

Optionally, if the AMF cannot determine an authentic identity of the UE after receiving the registration request message #Aa, the AMF may request to obtain the SUCI of the UE from the UE in steps S409 and S410.

S409 and S410: The AMF sends an N2 message #Bb to the N3IWF, and the N3IWF sends an IKE_AUTH request message #Cc to the UE. The N2 message #Bb and the IKE_AUTH request message #Cc include a NAS identity request message, used to request to obtain identity information of the UE, for example, the SUCI of the UE.

Correspondingly, the UE sends an IKE_AUTH response message #Cc to the N3IWF, and the N3IWF sends an N2 message #Bb' to the AMF. The KE_AUTH response message #Cc and the N2 message #Bb' include a NAS identity response message, and the message carries the SUCI of the UE.

It should be understood that the NAS identity request message and the NAS identity response message are encapsulated in an EAP/5G-NAS data packet.

Optionally, the AMF performs authentication on the UE. For details, refer to the following steps S411 to S418.

For example, if the SUCI of the UE is received in step S408 or S409, the AMF may determine to perform authentication on the UE. If the 5G-GUTI of the UE is received in step S408 or S409, and integrity protection of the registration request message #Aa is successfully verified, the AMF may determine not to initiate authentication on the UE. In this case, steps S411 to S418 may be skipped.

It should be noted that when the AMF determines to perform authentication on the UE, the AMF needs to select an AUSF. To be specific, before performing step S411, the AMF needs to determine the AUSF. For a specific implementation in which the AMF selects and discovers the AUSF, refer to related descriptions in the 3GPP protocol TS 23.501. For brevity, details are not described herein again.

S411: The AMF sends an authentication request message #Aa to the AUSF.

Correspondingly, the AUSF receives the authentication request message #Aa from the AMF.

The authentication request message #Aa includes the SUCI of the UE. For example, the authentication request message #Aa may be a Nausf_UEAuthentication request message.

Further, after step S411 is performed, the AUSF obtains, from a UDM, an SUPI corresponding to the SUCI and an authentication vector used for authentication.

S412: The AUSF sends an authentication response message #Aa to the AMF.

Correspondingly, the AMF receives the authentication response message #Aa from the AUSF.

The authentication response message #Aa includes the authentication vector used for authentication. For example, the authentication response message #Aa may be a Nausf_UEAuthentication response message.

S413: The AMF sends an N2 message #Cc to the N3IWF.

Correspondingly, the N3IWF receives the N2 message #Cc from the AMF.

The N2 message #Cc includes a NAS message, for example, an authentication request message. For specific content included in the authentication request message, refer to related descriptions in chapter 6 in the 3GPP standard TS33.501. For brevity, details are not described herein again.

S414: The N3IWF sends an IKE_AUTH request message #Dd to the UE.

Correspondingly, the UE receives the IKE_AUTH request message #Dd from the N3IWF.

The IKE_AUTH request message #Dd includes an EAP-Req/5G-NAS/NAS-PDU. For example, the IKE_AUTH request message #Dd may be an authentication request message.

S415: The UE sends an IKE_AUTH response message #Dd to the N3IWF.

Correspondingly, the N3IWF receives the IKE_AUTH response message #Dd from the UE.

The IKE_AUTH response message #Dd is an EAP-Req/5G-NAS/NAS-PDU. For example, the IKE_AUTH response message #Dd may be an authentication response message. For specific content included in the authentication response message, refer to related descriptions in chapter 6 in the 3GPP standard TS33.501. For brevity, details are not described herein again.

S416: The N3IWF sends an N2 message #Dd to the AMF.

Correspondingly, the AMF receives the N2 message #Dd from the AMF.

The N2 message #Dd includes a NAS message, for example, an authentication response message.

For example, for a specific operation after the AMF receives the authentication response message, refer to related descriptions in chapter 6 in the 3GPP standard TS 33.501. For brevity, details are not described herein again. For example, if an authentication method is a 5G-AKA method, the AMF needs to perform verification on the UE, and after verification succeeds, sends RES* carried in the authentication response message to the AUSF, that is, performs step S417. If an authentication method is an EAP-AKA' method, the AMF directly forwards an EAP Response/AKA'-Challenge message to the AUSF, that is, performs step S417.

S417: The AMF sends an authentication request message #Bb to the AUSF.

Correspondingly, the AUSF receives the authentication request message #Bb from the AMF.

For example, the authentication request message #Bb may be a Nausf_UEAuthentication request message. The Nausf_UEAuthentication request message includes a parameter used by the AUSF to verify the UE. For specific content, refer to related descriptions in chapter 6 in the 3GPP standard TS33.501. In addition, for a specific implementation in which the AUSF performs verification on the UE, refer to related descriptions in chapter 6 in the 3GPP standard TS 33.501. For brevity, details are not described herein again.

S418: The AUSF sends an authentication response message #Bb to the AMF.

Correspondingly, the AMF receives the authentication response message #Bb from the AUSF.

For example, the authentication response message #Bb may be an Nausf_UEAuthentication response message. If authentication succeeds, the Nausf_UEAuthentication response message includes an authentication success result and a key K_{SEAF}. For a method for generating the K_{SEAF}, refer to related descriptions in chapter 6 in the 3GPP standard TS33.501. For brevity, details are not described herein again.

Further, after determining that the AUSF successfully authenticates the UE, the AMF may derive an AMF key K_{AMF} based on the key K_{SEAF}. It should be understood that K_{AMF} may be used to generate a NAS security key and an N3IWF key (for example, K_{N3IWF}). The NAS security key includes a NAS encryption key and a NAS integrity protection key, and the NAS security key is generated in this case. The N3IWF key is used to establish an IPsec SA secure connection between the UE and the N3IWF. The NAS security key is used to protect a NAS message carried in a subsequent step (for example, steps S419 to S422).

It should be understood that a generation parameter of K_{N3IWF} includes but is not limited to an uplink NAS COUNT value, access type (access type) information, and K_{AMF}. The uplink NAS COUNT value includes at least two parts: a sequence number (sequence number, SQN) and an overflow count (overflow count). For specific content, refer to related descriptions in 3GPP TS 33.501. The SQN is carried and transferred in the NAS message. For example, the uplink NAS COUNT value used to generate K_{N3IWF} includes the following two possibilities:
(1) If authentication is performed and a NAS SMC message is sent, the uplink NAS COUNT value is uplink NAS COUNT formed by an SQN in a NAS security mode command message.
(2) If authentication is not performed and a NAS SMC message is not sent, uplink NAS COUNT formed by an SQN in a registration request message is used.

It should be noted that K_{N3IWF} is generated before a message in step S423 is performed. For example, if the AMF performs a NAS SMC procedure (refer to steps S419 to S422), K_{N3IWF} is generated after step S422. In addition, a sending occasion of K_{N3IWF} is step S423, that is, K_{N3IWF} is carried in an N2 initial context setup request message #Aa sent by the AMF to the N3IWF.

S419: The AMF sends an N2 message #Ee to the N3IWF.

Correspondingly, the N3IWF receives the N2 message #Ee from the AMF.

The N2 message #Ee includes the NAS security mode command (that is, NAS SMC) message, used to request to activate NAS security. For specific content included in the NAS SMC message, refer to related descriptions in section 6.7.2 in the 3GPP standard TS33.501. For brevity, details are not described herein again.

S420: The N3IWF sends an IKE_AUTH response message #Bb to the UE.

Correspondingly, the UE receives the IKE_AUTH response message #Bb from the N3IWF.

The IKE_AUTH response message #Bb includes the NAS security mode command message.

For example, the N3IWF forwards an EAP-Request/5G-NAS data packet including the NAS SMC message, to the UE.

S421: The UE sends an IKE_AUTH request message #Ee to the N3IWF.

Correspondingly, the N3IWF receives the IKE_AUTH request message #Ee from the UE.

The IKE_AUTH request message #Ee includes a NAS security mode complete message, indicating that NAS security is activated. For specific content included in the NAS security mode complete message, refer to related descriptions in section 6.7.2 in the 3GPP standard TS33.501. For brevity, details are not described herein again.

In addition, the IKE_AUTH request message #Ee further includes a NAS PDU, and the NAS PDU carries an uplink NAS COUNT value used to generate the N3IWF key.

S422: The N3IWF sends an N2 message #Ff to the AMF.

Correspondingly, the AMF receives the N2 message #Ff from the N3IWF.

The N2 message #Ff includes the NAS security mode complete message.

For example, the N3IWF forwards, to the AMF through an N2 interface, a NAS data packet including the NAS SMC complete message.

Further, after the AMF receives the NAS SMC complete message or after integrity protection verification succeeds, the AMF starts an NGAP procedure to establish an AN context.

S423: The AMF sends the N2 initial context setup request message #Aa to the N3IWF.

Correspondingly, the N3IWF receives the initial context setup request message #Aa from the AMF.

The N2 initial context setup request message #Aa includes K_{N3IWF}.

For example, the N2 initial context setup request message #Aa may be an NGAP initial context setup request message. It should be understood that the N3IWF key is generated based on K_{AMF} and the uplink NAS COUNT value formed by the SQN carried in step S421.

S424: The N3IWF sends an IKE_AUTH response message #Ee to the UE.

Correspondingly, the UE receives the IKE_AUTH response message #Ee from the N3IWF.

The IKE_AUTH response message #Ee includes EAP-Success.

In this case, the EAP-5G session between the UE and the N3IWF is completed. It should be understood that there is no EAP-5G data packet interaction between the UE and the N3IWF subsequently.

Optionally, if the N3IWF does not receive K_{N3IWF} in step S423, the N3IWF responds with EAP-Failure.

S425: The UE performs IKE_AUTH exchange with the N3IWF based on an IKE_AUTH message.

The IKE_AUTH message includes a UE ID and an AUTH payload (that is, with AUTH). The IKE_AUTH message is used by the UE to establish an IPsec SA with the N3IWF, and the IPsec SA is referred to as a "signaling IPsec SA".

For example, before performing S425, the UE may generate the N3IWF key based on K_{AMF} and the uplink NAS COUNT value formed by the SQN carried in step S421. The N3IWF key is the same as the N3IWF key generated by the AMF. For a specific implementation, refer to step S418. The N3IWF may obtain, in step S423, the N3IWF key sent by the AMF. Therefore, the UE and the N3IWF may establish an IPsec SA based on the N3IWF key.

S426: The N3IWF sends an N2 initial context setup response message #Aa to the AMF.

Correspondingly, the AMF receives the N2 initial context setup response message #Aa from the N3IWF.

The N2 initial context setup response message #Aa is used to notify that a UE context has been created.

For example, the N2 initial context setup response message #Aa may be an NGAP initial context setup response message. To be specific, after the IPsec SA is successfully established between the UE and the N3IWF, the N3IWF sends the NGAP initial context setup response message to the AMF.

S427: The AMF sends an N2 message #Gg to the N3IWF.

Correspondingly, the N3IWF receives the N2 message #Gg from the AMF.

The N2 message #Gg includes a NAS registration accept message (for example, a NAS Registration Accept message).

For example, after the AMF receives the NGAP initial context setup response message of the UE, the AMF sends the NAS registration accept message of the UE to the N3IWF through the N2 interface.

S428: The N3IWF forwards the NAS registration accept message to the UE.

Correspondingly, the UE receives the NAS registration accept message from the N3IWF.

For example, after receiving the NAS registration accept message from the AMF, the N3IWF forwards the NAS registration accept message to the UE through the signaling IPsec SA established in step S425. It should be understood that all subsequent NAS messages between the UE and the N3IWF are carried through the established signaling IPsec SA.

FIG. 5 is an example flowchart of trusted non-3GPP registration 500 according to this application. As shown in FIG. 5, the following plurality of steps are included.

S500: UE selects a trusted non-3GPP access network, and establishes an L2 connection to a TNAP.

For example, the UE selects a PLMN and a trusted non-3GPP access network TNAN connected to the PLMN. In addition, the UE establishes the layer 2 (layer 2, L2) connection to the trusted non-3GPP access point TNAP.

Next, steps S501 to S521 are an EAP procedure between the UE and the TNAN. An EAP data packet is encapsulated in an L2 message, for example, in the IEEE 802.3, 802.1x, or is encapsulated in a PPP data packet.

S501: The TNAP sends an L2 message #1 to the UE.

Correspondingly, the UE receives the L2 message #1 from the TNAP.

The L2 message #1 includes an EAP-Req/Identity message, used to request to obtain identification information of the UE.

S502: The UE sends an L2 message #2 to the TNAP.

Correspondingly, the TNAP receives the L2 message #2 from the UE.

The L2 message #2 includes a network access identifier (network access identifier, NAI), and the NAI is used to request a 5G connectivity (5G connectivity) of a specific PLMN. For example, NAI="<any_username>@nai.5gc. mnc<MNC>.mcc<MCC>.3gppnetwork.org" indicates that the NAI triggers the TNAP to send an AAA request (AAA request) to a TNGF, that is, step S503 is performed.

S503: The TNAP sends an AAA message #AA to the TNGF.

Correspondingly, the TNGF receives the AAA message #AA from the TNAP.

The AAA message #AA includes the NAI, used to request the 5G connectivity.

Optionally, the AAA message #AA further includes an identifier of the TNAP, which may be considered as user location information (user location information, ULI).

It should be understood that the EAP data packet between the TNAP and the TNGF is encapsulated through the AAA message.

S504: The TNGF sends an L2 message #3 to the UE.

Correspondingly, the UE receives the L2 message #3 from the TNAG.

The L2 message #3 includes an EAP Request/5G-Start data packet, used to notify the UE to initiate an EAP-5G session. For example, the UE is notified to start to send a 5G-NAS message, and the 5G-NAS message may be encapsulated in the EAP-5G data packet.

S505: The UE sends an L2 message #4 to the TNGF.

Correspondingly, the TNGF receives the L2 message #4 from the UE.

The L2 message #4 includes an EAP-Response/5G-NAS data packet, and the EAP-Response/5G-NAS data packet includes an AN parameter and a registration request message #AA. The AN parameter includes parameter information used by the TNGF to select an AMF, for example, a UE ID, a GUAMI, and a selected PLMN ID (or a PLMN ID and an NID).

It should be noted that if the UE has accessed a 3GPP system before, for example, has accessed the 3GPP system by using a 3GPP technology, the UE may include a 5G-GUTI in the registration request message #AA; or if the UE has not accessed a 3GPP system before, the UE may include an SUCI in the registration request message #AA.

S506: The TNGF performs AMF selection.

For a specific implementation, refer to step S407 in the method 400. For brevity, details are not described herein again.

S507: The TNGF sends an N2 message #AA to the AMF.

For a specific implementation, refer to step S408 in the method 400. For brevity, details are not described herein again.

S508 and S509: The AMF sends an N2 message #BB to the TNGF, and the TNGF sends an L2 message #5 to the UE.

Correspondingly, the UE sends the L2 message #5 to the TNGF, and the TNGF sends an N2 message #BB' to the AMF.

For a specific implementation, refer to steps S409 and S410 in the method 400. A difference lies in that the IKEv2 message is replaced with the L2 message. For brevity, details are not described herein again.

S510: The AMF sends an authentication request message #AA to an AUSF.

For a specific implementation, refer to step S411 in the method 400. For brevity, details are not described herein again.

S511: The AUSF, the AMF, the TNGF, and the UE perform identity authentication and key protocol.

For a specific implementation, refer to steps S412 to S417 in the method 400. A difference lies in that the IKEv2 message is replaced with the L2 message. For brevity, details are not described herein again.

Further, after completing authentication on the UE, the AUSF performs step S512.

S512: The AUSF sends an authentication response message #AA to the AMF.

For a meaning of the authentication response message #AA, refer to step S418 in the method 400. A difference from the method 400 lies in that the AMF no longer generates K_{N3IWF}, but generates a TNGF key (for example, K_{TNGF}). For an implementation in which the AMF generates K_{TNGF}, refer to the implementation in which the AMF generates K_{N3IWF} in step S418. For brevity, details are not described herein again. In addition, a sending occasion of K_{TNGF} is step S517, that is, K_{TNGF} is carried in an N2 initial context setup request message #AA sent by the AMF to the TNGF.

S513: The AMF sends an N2 message #CC to the TNGF.

Correspondingly, the TNGF receives the N2 message #CC from the AMF.

For specific content included in the N2 message #CC, refer to step S419 in the method 400. For brevity, details are not described herein again.

S514: The TNGF sends an L2 message #6 to the UE.

Correspondingly, the UE receives the L2 message #6 from the TNGF.

The L2 message #6 includes a NAS security mode command message.

S515: The UE sends an L2 message #7 to the TNGF.

Correspondingly, the TNGF receives the L2 message #7 from the UE.

The L2 message #7 includes a NAS security mode complete message, indicating that NAS security is activated. For specific content included in the NAS security mode complete message, refer to related descriptions in section 6.7.2 in the 3GPP standard TS33.501. For brevity, details are not described herein again.

In addition, the L2 message #7 further includes a NAS PDU, and the NAS PDU carries an uplink NAS COUNT value used to generate the TNGF key.

S516: The TNGF sends an N2 message #DD to the AMF.

Correspondingly, the AMF receives the N2 message #DD from the TNGF.

For specific content included in the N2 message #DD, refer to step S422 in the method 400. For brevity, details are not described herein again.

S517: The AMF sends the N2 initial context setup request message #AA to the TNGF.

Correspondingly, the TNGF receives the N2 initial context setup request message #AA from the AMF.

For specific content included in the N2 initial context setup request message #AA, refer to step S423 in the method 400. A difference from the method 400 lies in that the AMF transfers the K_{TNGF}.

S518: The TNGF sends an L2 message #8 to the UE.

Correspondingly, the UE receives the L2 message #8 from the TNGF.

The L2 message #8 includes an EAP-Request/5G-Notification, the EAP-Request/5G-Notification data packet includes address information of the TNGF, and the address information of the TNGF is used by the UE to establish an IPsec SA with the TNGF in subsequent steps S524 to S527.

S519: The UE sends an L2 message #9 to the TNGF.

Correspondingly, the TNGF receives the L2 message #9 from the UE.

The L2 message #9 includes an EAP-Response/5G-Notification.

S520: The TNGF sends an AAA message #BB to the TNAP.

Correspondingly, the TNAP receives the AAA message #BB from the TNGF.

The AAA message #BB includes EAP-Success and a TNAP key.

It should be understood that the TNAP key is further derived by the AMF based on the TNGF key obtained in step 512, and the TNAP key is used to establish L2 security (layer-2 security) between the UE and the TNAP. For details, refer to step S522.

S521: The TNGF sends an L2 message #10 to the UE.

Correspondingly, the UE receives the L2 message #10 from the TNGF.

The L2 message #10 includes EAP-Success, indicating that the EAP-5G session between the UE and the TNGF is completed. It should be understood that there is no EAP-5G data packet interaction between the UE and the TNGF subsequently.

S522: The UE establishes an L2 security (L2 security) connection to the TNAP.

For example, the UE generates the TNAP key based on K_{AMF} and an uplink NAS COUNT value formed by an SQN carried in step S519. The TNAP key is the same as the TNAP key generated by the AMF. The TNAP may obtain, in step S520, the TNAP key sent by the TNGF. Therefore, the UE and the TNAP may establish L2 security protection based on the TNAP key.

It should be understood that the TNAP is a trusted non-3GPP access device. Therefore, after step S521, the UE may directly establish a connection to the TNAP without identity authentication or the like.

S523: The TNAN sends an IP configuration to the UE.

Correspondingly, the UE receives the IP configuration from the TNAN.

For example, the UE receives the IP configuration by using a dynamic host configuration protocol (dynamic host configuration protocol, DHCP), that is, the UE obtains an IP address of the UE. In this case, the UE is successfully connected to the TNAN, and obtains a local IP configuration of the UE.

Next, the UE establishes a secure connection to the TNGF based on an address of the TNGF obtained in step S518, that is, performs the following steps S524 to S527. It should be understood that, in the standard, a connection interface between the UE and the TNGF is defined as NWt, that is, an NWt secure connection is established between the UE and the TNGF.

S524: The UE performs IKE_INIT interaction with the TNGF to establish the secure connection.

S525: The UE sends IKE_AUTH #1 to the TNGF.

Correspondingly, the TNGF receives the IKE_AUTH #1 from the UE.

The IKE_AUTH #1 includes a UE ID, and the UE ID is the same as the UE ID carried in step S505. This is to enable the TNGF to determine, based on the UE ID, the TNGF key corresponding to the UE. The TNGF key is used to perform bidirectional identity authentication between the UE and the TNGF.

It should be understood that transmission between the UE and the TNGF does not need to be encrypted. This is because a trusted network is deployed by an operator and is generally regarded as trusted. Therefore, encryption is not required.

S526: The TNGF sends IKE_AUTH #2 to the UE.

Correspondingly, the UE receives the IKE_AUTH #2 from the TNGF.

The IKE_AUTH #2 includes an "inner" IP address, a TCP port, NAS_IP_ADDRESS, and a differentiated services code point (differentiated services code point, DSCP) value.

It should be understood that the DSCP value needs to be marked for all IP data packets transmitted between the UE and the TNGF. The UE and the TNAP can map the DSCP value to a corresponding QoS level.

S527: The UE establishes a TCP connection to the TNGF.

For example, after a signaling IPsec SA is established based on the foregoing step S524, the UE establishes the TCP connection to the TNGF based on the NAS_IP_ADDRESS and through the TCP port.

It should be understood that all subsequent NAS messages are transmitted through the signaling IPsec SA. For an uplink NAS message sent by the UE to the AMF, a source address is the "inner" IP address of the UE, and a destination address is the NAS_IP_ADDRESS. For a downlink NAS message sent by the AMF to the UE, a source address is the NAS_IP_ADDRESS, and a destination address is the "inner" IP address of the UE.

S528: The TNGF sends an N2 initial context setup response message #AA to the AMF.

Correspondingly, the AMF receives the N2 initial context setup response message #AA from the TNGF.

For specific content included in the N2 initial context setup response message #AA, refer to step S426 in the method 400. For brevity, details are not described herein again.

S529: The AMF sends an N2 message #EE to the TNGF.

Correspondingly, the TNGF receives the N2 message #EE from the AMF.

For specific content included in the N2 message #EE, refer to step S427 in the method 400. For brevity, details are not described herein again.

It should be understood that, when the AMF subsequently requests registration with a UDM, an access type (access type) that needs to be provided to the UDM is non-3GPP access.

S530: The TNGF sends a NAS registration complete message to the UE.

Correspondingly, the UE receives the NAS registration complete message from the TNGF.

In this application, the registration complete message indicates that a registration request of the UE is accepted, and may be replaced with a registration accept message in terms of name. This is not emphasized below.

For example, after receiving the NAS registration accept message from the AMF, the TNGF sends the NAS registration complete message to the UE through the established NWt connection. It should be understood that all subsequent NAS messages between the UE and the TNGF are carried through the established NWt connection.

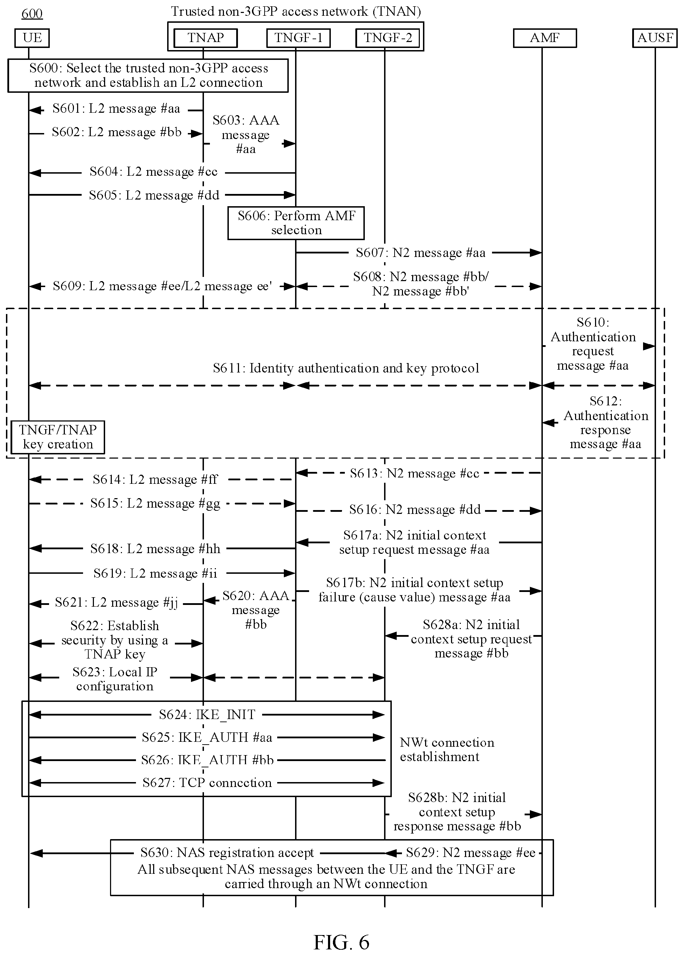

In consideration of current standard discussion, the UE selects a default N3IWF or TNGF for access according to an existing rule, and then the AMF determines whether there is a more appropriate N3IWF or TNGF that can be used by the UE. If there is the more appropriate N3IWF or TNGF, the AMF needs to reselect an N3IWF or TNGF for the UE. In this case, a problem of relocation of the N3IWF or the TNGF is involved. The following uses a trusted non-3GPP access network as an example to specifically describe how to reallocate the TNGF to the UE with reference to FIG. 6.

FIG. 6 is an example flowchart of TNGF relocation 600 according to an embodiment of this application. As shown in FIG. 6, the following plurality of steps are included.

S600: UE selects a trusted non-3GPP access network, and establishes an L2 connection to a TNAP.

S601: The TNAP sends an L2 message #aa to the UE.

Correspondingly, the UE receives the L2 message #aa from the TNAP.

The L2 message #aa includes an EAP-Req/Identity message, used to request to obtain identification information of the UE.

S602: The UE sends an L2 message #bb to the TNAP.

Correspondingly, the TNAP receives the L2 message #bb from the UE.

The L2 message #bb includes an NAI, used to request a 5G connectivity of a specific PLMN. S603: The TNAP sends an AAA message #aa to a TNGF-1.

Correspondingly, the TNGF-1 receives the AAA message #aa from the TNAP.

The AAA message #aa includes the NAI, used to request the 5G connectivity.

S604: The TNGF-1 sends an L2 message #cc to the UE.

Correspondingly, the UE receives the L2 message #cc from the TNAG-1.

The L2 message #cc includes an EAP Request/5G-Start data packet, used to notify the UE to initiate an EAP-5G session.

S605: The UE sends an L2 message #dd to the TNGF-1.

Correspondingly, the TNGF-1 receives the L2 message #dd from the UE.

The L2 message #dd includes an EAP-Response/5G-NAS data packet, and the EAP-Response/5G-NAS data packet includes an AN parameter and a registration request message #aa.

S606: The TNGF-1 performs AMF selection.

S607: The TNGF-1 sends an N2 message #aa to an AMF.

Correspondingly, the AMF receives the N2 message #aa from the TNGF-1.

The N2 message #aa includes the registration request message #aa.

S608 and S609: Optionally, the AMF sends an N2 message #bb to the TNGF-1, and the TNGF-1 sends an L2 message #ee to the UE.

Correspondingly, the UE sends an L2 message #ee' to the TNGF-1, and the TNGF-1 sends an N2 message #bb' to the AMF.

The N2 message #bb and the L2 message #ee include a NAS identity request, used to request to obtain an SUCI of the UE.

S610: Optionally, the AMF sends an authentication request message #aa to an AUSF.

Correspondingly, the AUSF receives the authentication request message #aa from the AMF.

The authentication request message #aa includes the SUCI of the UE.

S611: The AUSF, the AMF, the TNGF-1, and the UE perform identity authentication and key protocol.

S612: The AUSF sends an authentication response message #aa to the AMF.

Correspondingly, the AMF receives the authentication response message #aa from the AUSF.

The authentication response message #aa includes an SEAF key and EAP-Success.

Further, the AMF may derive a NAS security key and a TNGF-1 key based on the SEAF key.

S613: The AMF sends an N2 message #cc to the TNGF-1.

Correspondingly, the TNGF-1 receives the N2 message #cc from the AMF.

The N2 message #cc includes a NAS security mode command message, used to request to activate NAS security. The NAS security mode command includes EAP-Success.

S614: The TNGF-1 sends an L2 message #ff to the UE.

Correspondingly, the UE receives the L2 message #ff from the TNGF-1.

The L2 message #ff includes the NAS security mode command message.

S615: The UE sends an L2 message #gg to the TNGF-1.

Correspondingly, the TNGF-1 receives the L2 message #gg from the UE.

The L2 message #gg includes a NAS security mode complete message, indicating that NAS security is activated.

In addition, the L2 message #gg further includes a NAS PDU, and the NAS PDU carries an uplink NAS COUNT value, used to generate the TNGF-1 key.

S616: The TNGF-1 sends an N2 message #dd to the AMF.

Correspondingly, the AMF receives the N2 message #dd from the TNGF-1.

The N2 message #dd includes the NAS security mode complete message.

For example, if the AMF determines that the TNGF-1 does not support slice access of the UE, the AMF reselects a TNGF-2 for the UE to perform access. Next, a redirection process is described with reference to steps S617a, S618, and S617b.

S617a: The AMF sends an N2 initial context setup request message #aa to the TNGF-1.

Correspondingly, the TNGF-1 receives the N2 initial context setup request message #aa from the AMF.

The N2 initial context setup request message #aa indicates that the UE needs to initiate redirection. The N2 initial context setup request message #aa includes the TNGF-1 key and address information of the TNGF-2, for example, an IP address of the TNGF-2. The TNGF-1 key is used to subsequently establish security protection between the UE and the TNGF-1.

S618: The TNGF-1 sends an L2 message #hh to the UE.

Correspondingly, the UE receives the L2 message #hh from the TNGF-1.

The L2 message #hh includes an EAP-Request/5G-Notification, and the EAP-Request/5G-Notification data packet includes the address information of the TNGF-2.

S619: The UE sends an L2 message #ii to the TNGF-1.

Correspondingly, the TNGF-1 receives the L2 message #ii from the UE.

The L2 message #ii includes an EAP-Response/5G-Notification.

It should be noted that, for a specific implementation of steps S600 to S619, refer to steps S500 to S519 in the method 500. Meanings of messages (for example, an N2 message, an L2 message, and a NAS message) carried in corresponding steps are similar. For brevity, details are not described herein again.

S617b: The TNGF-1 sends an N2 initial context setup failure message #aa to the AMF.

Correspondingly, the AMF receives the N2 initial context setup failure message #aa from the TNGF-1.

The TNGF-1 uses the N2 initial context setup failure message #aa as a response to the N2 initial context setup request message #aa, and the N2 initial context setup failure message #aa indicates that a UE context fails to be created. Optionally, the N2 initial context setup failure message #aa carries a cause value, and the cause value indicates that the UE context fails to be created.

S620: The TNGF-1 sends an AAA message #bb to the TNAP.

Correspondingly, the TNAP receives the AAA message #bb from the TNGF.

The AAA message #bb includes EAP-Success and a TNAP key.

S621: The TNGF-1 sends an L2 message #jj to the UE.

Correspondingly, the UE receives the L2 message #jj from the TNGF-1.

The L2 message #jj includes EAP-Success, indicating that the EAP-5G session between the UE and the TNGF-1 is completed.

S622: The UE establishes an L2 secure connection to the TNAP.

S623: The TNAN sends an IP configuration to the UE.

Correspondingly, the UE receives the IP configuration from the TNAN.

It should be noted that, for a specific implementation of steps S620 to S623, refer to steps S520 to S523 in the method 500. For brevity, details are not described herein again.

S628a: The AMF sends an N2 initial context setup request message #bb to the TNGF-2.

Correspondingly, the TNGF-2 receives the N2 initial context setup request message #bb from the AMF.

The N2 initial context setup request message #bb includes the TNGF-1 key, and is used to subsequently establish security between the UE and the TNGF-2.

Next, the UE establishes an NWt secure connection to the TNGF-2 based on the address of the TNGF-2 obtained in step S618, that is, performs the following steps S624 to S627. For a specific implementation, refer to steps S524 to S527 in the foregoing method 500. For brevity, details are not described again.

S624: The UE performs IKE_INIT interaction with the TNGF-2, to establish the secure connection.

S625: The UE sends IKE_AUTH #aa to the TNGF-2.

Correspondingly, the TNGF-2 receives the IKE_AUTH #aa from the UE.

The IKE_AUTH #aa includes a UE ID, and the UE ID is the same as the UE ID carried in step S605. This is to enable the TNGF-2 to determine, based on the UE ID, the TNGF-1 key corresponding to the UE. The TNGF-1 key is used to perform bidirectional identity authentication between the UE and the TNGF-2.

S626: The TNGF sends IKE_AUTH #bb to the UE.

Correspondingly, the UE receives the IKE_AUTH #bb from the TNGF.

The IKE_AUTH #bb includes an "inner" IP address, a TCP port, NAS_IP_ADDRESS, and a DSCP value.

S627: The UE establishes a TCP connection to the TNGF-2.

S628b: The TNGF-2 sends an N2 initial context setup response message #bb to the AMF.

Correspondingly, the AMF receives the N2 initial context setup response message #bb from the TNGF-2.

The TNGF-2 uses the N2 initial context setup response message #bb as a response to the N2 initial context setup request message #bb, and the N2 initial context setup response message #bb indicates that the UE context has been created.

S629: The AMF sends an N2 message #ee to the TNGF-2.

Correspondingly, the TNGF-2 receives the N2 message #ee from the AMF.

The N2 message #ee includes a NAS registration accept message sent to the UE.

S630: The TNGF-2 sends a NAS registration complete message to the UE.

Correspondingly, the UE receives the NAS registration complete message from the TNGF-2.

It should be noted that, for a specific implementation of the steps S628b to S630, refer to steps S528 to S530 in the method 500. Meanings of messages (for example, an N2 message and a NAS message) carried in corresponding steps are similar. For brevity, details are not described herein again.

Based on the method shown in FIG. 6, the AMF separately sends a same TNGF key (for example, K_{TNGF-1}) to two TNGFs (for example, the TNGF-1 and the TNGF-2), which violates a security principle. The security principle is that a same key is prohibited to be sent to different entities with a same function. In other words, a same AMF key (for example, K_{amf}) cannot be sent to two different AMFs (for example, an AMF-1 and an AMF-2).

Therefore, in the foregoing method 600, a key (for example, K_{TNGF-2}) needs to be regenerated for the TNGF-2. It is considered that an uplink NAS key needs to be used to generate the TNGF key, but there is no new uplink NAS message after the NAS SMC procedure, and consequently the uplink NAS COUNT value remains unchanged. In this case, the regenerated key is still K_{TNGF-1}, which still violates the security principle. Therefore, when the AMF performs TNGF (or N3IWF) relocation for the UE, and needs to sequentially provide keys for different TNGFs (or N3IWFs), how to implement key isolation to ensure that different TNGFs (or N3IWFs) obtain different keys is an urgent technical problem to be resolved.

In view of this, this application provides a communication method and a communication apparatus. In a redirection case, key isolation can be ensured when keys are sequentially provided for different TNGFs (or N3IWFs), to ensure that the different TNGFs (or N3IWFs) obtain different keys, thereby ensuring security in network communication and improving user experience.

For ease of understanding of embodiments of this application, the following descriptions are provided.

First, in this application, unless otherwise stated or there is a logic conflict, terms and/or descriptions between different embodiments are consistent and may be mutually referenced, and technical features in different embodiments may be combined into a new embodiment based on an internal logic relationship thereof.

Second, in this application, "at least one" indicates one or more, "a plurality of" indicates two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" usually indicates an "or" relationship between associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

Third, in this application, "first", "second", and various numbers (for example, #1 and #2) indicate differentiation for ease of description, but are not intended to limit the scope of embodiments of this application, for example, distinguishing different messages or the like, rather than describing a particular order or sequence. It should be understood that objects described in such a way are interchangeable in an appropriate circumstance, so that a solution other than embodiments of this application can be described. It should be noted that a number of each step in embodiments of this application is merely a number, and does not represent an execution sequence. A specific execution sequence is described by using words.

Fourth, in this application, descriptions such as "when...", "in a case of...", and "if" all mean that a device performs corresponding processing in an objective case, are not intended to limit time, do not require the device to perform a determining action during implementation, and do not mean that there is another limitation.

Fifth, in this application, terms "include", "contain" and any other variants thereof are intended to cover non-exclusive inclusion. For example, a process, method, system, product, or device that includes a series of steps or units is not necessarily limited to those steps or units that are clearly listed, but may include other steps or units that are not explicitly listed or are inherent to such a process, method, product, or device.

Sixth, in this application, "indicate" may include a direct indication and an indirect indication. When a piece of indication information indicates A, the indication information may directly indicate A or indirectly indicate A, but it does not indicate that the indication information definitely carries A.

Indication manners in this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in this application may be an explicit indication, namely, a direct indication using signaling or an indication obtained based on a parameter indicated by signaling in combination with another rule or another parameter or obtained through deduction; or may be an implicit indication, namely, an indication obtained based on a rule, a relationship, or another parameter or obtained through deduction. This is not specifically limited in this application.

Seventh, in this application, a "protocol" may mean a standard protocol in the communication field, for example, may include a 5G protocol, an NR protocol, and a related protocol applied to a future communication system. This is not limited in this application. The term "pre-configuration" may include pre-definition, for example, definition in a protocol. The "pre-definition" may be implemented by pre-storing corresponding code or a corresponding table in a device; or implemented in another manner of indicating related information. A specific implementation of the "pre-definition" is not limited in this application.

Eighth, in this application, "storage" may mean storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Ninth, in this application, "communication" may also be described as "data transmission", "information transmission", "data processing", or the like. The "transmission" includes "sending" and "receiving". This is not limited in this application.

Tenth, in this application, dashed lines in the accompanying drawings of the specification represent optional steps.

The technical solutions provided in this application are described below in detail with reference to the accompanying drawings.

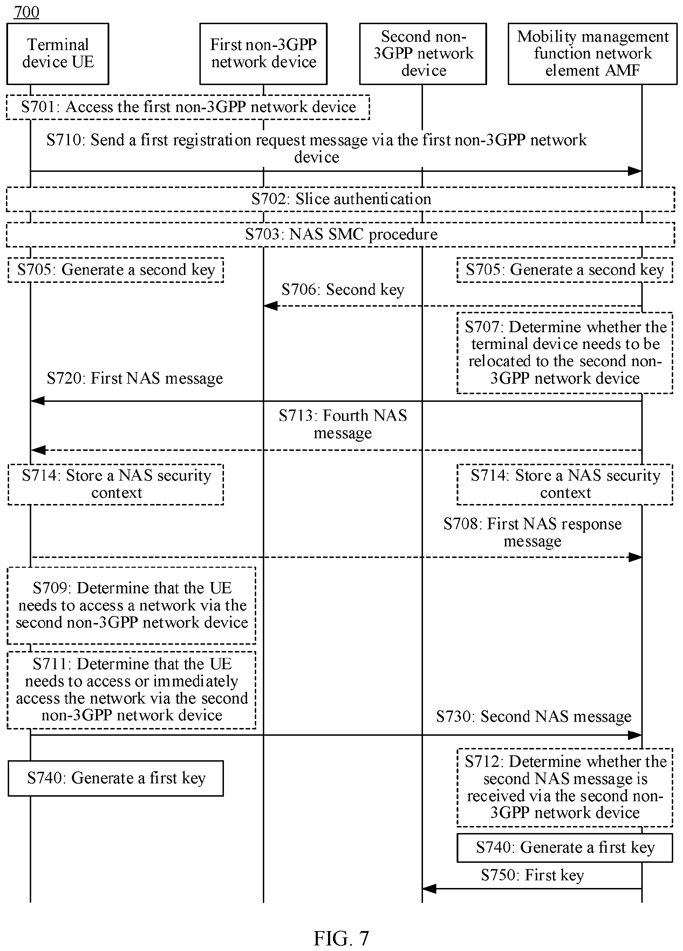

FIG. 7 is a schematic flowchart of a communication method 700 according to an embodiment of this application. As shown in FIG. 7, the method includes the following plurality of steps.

S710: A terminal device UE sends a first registration request message to a mobility management function network element AMF via a first non-3GPP network device.

Correspondingly, the mobility management function network element AMF receives the first registration request message sent by the terminal device via the first non-3GPP network device.

The first registration request message includes first identification information of the terminal device, and the first registration request message is used to request to access a network.

Optionally, the first non-3GPP network device may be an N3IWF or a TNGF.

Optionally, the first identification information may be an SUCI or a 5G-GUTI (for example, a second 5G-GUTI). For example, the 5G-GUTI is identification information delivered by the AMF in a previous registration procedure.

It should be understood that before the terminal device sends the first registration request message to the AMF via the first non-3GPP network device, the method further includes step S701.

S701: The terminal device determines and accesses the first non-3GPP network device.

For a specific implementation, refer to the descriptions of the method 400. Details are not described herein again.

S720: When determining that the terminal device needs to be relocated to a second non-3GPP network device, the AMF sends a first NAS message to the terminal device, where the first NAS message includes identification information of the second non-3GPP network device, and the identification information of the second non-3GPP network device is used by the terminal device to access the network via the second non-3GPP network device.

Correspondingly, the terminal device receives the first NAS message from the AMF, where the first NAS message includes the identification information of the second non-3GPP network device.

For example, the AMF sends the first NAS message to the terminal device via the first non-3GPP network device.

Optionally, the identification information of the second non-3GPP network device may be IP address information of the second non-3GPP network device, or FQDN information of the second non-3GPP network device, or information used to find the second non-3GPP network device.

Optionally, the first NAS message further includes a first cause value and/or first information, where the first cause value indicates that the UE needs to immediately access the network or re-access the network in a subsequent procedure via the second non-3GPP network device. The first information indicates association information of the FQDN information of the second non-3GPP network device, for example, notifies the UE of information associated with the FQDN information of the second non-3GPP network device, for storage and subsequent use by the UE. For example, the first information is slice information (for example, slice information S-NSSAI corresponding to the second non-3 GPP network device). For another example, the first information is storage indication information, used to notify the UE that the stored information is preferentially used for subsequent access.

For example, the first NAS message may be a relocation request message, and a name of the relocation request message may be a NAS N3IWF relocated request message, DL NAS TRANSPORT, a UE configuration update command message, a NAS registration accept message, a NAS registration reject message, or the like. It should be understood that the foregoing names are merely examples, and should not constitute any limitation on the technical solutions of this application.

Optionally, before the AMF sends the first NAS message to the terminal device, steps S702 and S703 are included.

S702: The AMF performs slice authentication on the UE.

Further, when slice authentication on the terminal device succeeds, the AMF determines that the terminal device can access the network via the second non-3GPP network device.

For a specific slice authentication procedure, refer to related descriptions in chapter 16 in the 3GPP standard TS 33.501. For brevity, details are not described herein again.

For example, if the AMF determines, from a perspective of a slice, that a more appropriate N3IWF (for example, N3IWF-2) serves the UE, to prevent a failure of an entire network access procedure because the UE cannot pass slice authentication when the UE performs a procedure of re-accessing the AMF via the N3IWF-2 immediately after the AMF relocates the N3IWF-2 for the UE, resulting in a waste of resources. Therefore, before the AMF determines to relocate the N3IWF-2 for the UE, whether the UE can use the slice may be first determined through slice authentication, to avoid an unnecessary waste of resources.

Optionally, whether the slice authentication procedure is performed may depend on a local policy.

S703: The AMF performs a NAS SMC procedure with the UE.

It should be understood that when it is determined that NAS security between the AMF and the UE is activated, subsequent information interaction (for example, the first NAS message or a second NAS message) between the AMF and the UE is protected through NAS security, so that authenticity of information can be ensured, and security of network communication can be ensured.

It should be noted that when the first identification information of the terminal device is the SUCI, step S703 is performed. Otherwise, step S703 is not performed.

For a specific implementation of the NAS SMC, refer to related descriptions of the method 400. For brevity, details are not described herein again.

Optionally, the AMF and the UE need to generate second keys, to establish a secure connection between the UE and the first non-3GPP network device. For example, in step S710, the UE sends the first registration request message or a NAS SMP message including a second key generation parameter to the AMF. For another example, in step S703, the UE sends the NAS message in the NAS SMC procedure including a second key generation parameter to the AMF. The second key generation parameter may be a NAS SQN. The AMF and the UE use NAS SQNs and root keys Kamf as input parameters to generate the second keys, that is, step S705 is performed.

S705: Optionally, the AMF generates the second key based on the second key generation parameter.

Specifically, the AMF generates the second key based on the second key generation parameter carried in a third NAS message. The third NAS message is the first registration request message or the NAS SMP message. The second key generation parameter is the first registration request message or uplink NAS COUNT corresponding to an SQN carried in the NAS SMP message. The AMF calculates the first key based on the root key and the uplink NAS COUNT value as input parameters. The root key is K_{AMF}, and K_{AMF} is generated after the AMF performs primary authentication, or is generated by another AMF.

For a specific implementation of generating the key, refer to related descriptions of the method 400. For brevity, details are not described again.

S706: Optionally, the AMF sends the second key to the first non-3GPP network device.

The second key generation parameter may be carried in the first registration request message in step S710, and the second key is used to establish the secure connection between the first non-3GPP network device and the terminal device.

Therefore, the UE may establish the secure connection to the first non-3GPP network device based on the second key.

It should be noted that step S705 and step S706 may be performed before step S720, or may be performed after step S720, or may not be performed.

For example, if step S705 and step S706 are performed before step S720, that is, when the secure connection between the first non-3GPP network device and the terminal device has been established, the AMF may send the first NAS message to the terminal device. If step S705 and step S706 are performed after step S720, that is, the AMF may send the first NAS message to the terminal device, and then the first non-3GPP network device and the terminal device complete establishment of the secure connection.

Optionally, before the AMF sends the first NAS message to the UE, step S707 is included.

S707: The AMF determines whether the UE needs to be relocated to the second non-3GPP network device.

Optionally, the AMF determines, according to the local policy, whether to perform a first action.

The first action is: The AMF determines whether the UE needs to be relocated to the second non-3GPP network device.

For example, the local policy may be a switch option. For example, if the switch is selected as on, the AMF performs the determining action; or if the switch is selected as off, the AMF does not perform the determining action. For another example, the local policy may also be pre-configuration information. If the AMF has the pre-configuration information, the determining action is performed; otherwise, the determining action is not performed. The local policy may also be a local record, and the local record may be a part of a UE context. If the local record shows that the UE has performed the action, the action is not performed; otherwise, the action is performed.

An implementation in which the AMF determines whether the UE needs to be relocated to the second non-3GPP network device includes but is not limited to:
Manner 1: The AMF determines, based on information about a slice requested by the UE, whether the UE needs to be relocated to the second non-3GPP network device. For example, if the AMF finds that one or more other N3IWFs are more appropriate than the N3IWF-1 to provide a slice service for the UE, the AMF may determine to relocate the UE to a N3IWF that can serve the slice. For example, when there are a plurality of N3IWFs that can serve the UE, the AMF may randomly select one N3IWF, or the AMF selects a most appropriate N3IWF based on other information (for example, a current location of the UE) of the UE. On the contrary, if the AMF does not find that one or more other N3IWFs are more appropriate than the N3IWF-1 to provide a slice service for the UE, and the AMF determines that the N3IWF-1 can currently serve the slice, the AMF considers the N3IWF-1 as an optimal selection, and continues a subsequent registration procedure.
Manner 2: The AMF determines, based on location information of the first non-3 GPP network device, whether the UE needs to be relocated to the second non-3GPP network device. The AMF may determine, based on geographic location information of the N3IWF-1, whether to relocate the UE to another N3IWF. For example, if the AMF finds that one or more other N3IWFs are more appropriate than the N3IWF-1 to serve the UE, the AMF may determine to relocate one N3IWF for the UE. For example, when there are a plurality of N3IWFs that can serve the UE, the AMF may randomly select one N3IWF, or the AMF selects a most appropriate N3IWF based on other information (for example, a current location of the UE) of the UE. On the contrary, if the AMF does not find that one or more other N3IWFs are more appropriate than the N3IWF-1 to serve the UE, and the AMF determines that the current N3IWF-1 can serve the UE, the AMF considers the N3IWF-1 as an optimal selection, and continues a subsequent registration procedure.
Manner 3: The AMF determines, based on the local pre-configuration information, whether the UE needs to be relocated to the second non-3GPP network device. The AMF may determine, based on the local pre-configuration information, whether to relocate the UE to another N3IWF. For example, a list of a relationship between the N3IWF and S-NSSAI is locally pre-configured. When the UE uses S-NSSAI but does not use a corresponding N3IWF in the list, the AMF determines that the UE needs to be relocated to the another N3IWF. The local pre-configuration information may be configured for the AMF via a network management system. After receiving the pre-configuration information, the AMF stores the pre-configuration information.

Optionally, if the AMF finds one or more other N3IWFs that are more appropriate, the AMF may also determine not to relocate the UE to an N3IWF that can serve the slice. For example, the one or more N3IWFs that can serve the UE are already overloaded, and are not appropriate for being accessed by more UEs. The AMF may consider the N3IWF-1 as an optimal selection, and continue a subsequent registration procedure.

Optionally, the AMF may send a fourth NAS message to the UE in response to step S710, that is, perform step S713. Optionally, the response message may be performed in step S713, or may be performed based on the first NAS message in step S720. This is not limited in this application.

S713: The AMF sends the fourth NAS message to the UE.

Correspondingly, the UE receives the fourth NAS message from the AMF.

The fourth NAS message may be a first registration complete message or a first registration reject message. The first registration complete message and the first registration reject message include a first 5G-GUTI. The first 5G-GUTI is newly allocated by the AMF to the UE.

When the fourth NAS message is the first registration reject message, after the first non-3GPP network device forwards the fourth NAS message to the UE, the first non-3GPP network device sends an EAP-Failure message to the UE, to terminate the procedure.

When the fourth NAS message is the first registration complete message, the first NAS message may be sent before the fourth NAS message, or may be sent after the fourth NAS message. When the first NAS message is sent before the fourth NAS message, establishment of the secure connection between the first non-3GPP network device and the terminal device may be completed before the first NAS message is sent, or may be completed after the first NAS message is sent. When the fourth NAS message is sent before the first NAS message, establishment of the secure connection between the first non-3GPP network device and the terminal device is completed before the fourth NAS message is sent.

When the fourth NAS message is sent, the first NAS message may be a relocation request message, and a name of the relocation request message may be a NAS N3IWF relocated request message, DL NAS TRANSPORT, a UE configuration update command message, or the like. In addition, the identification information of the second non-3GPP network device and the cause value may be respectively carried in the first NAS message and the fourth NAS message. This is not specifically limited in embodiments. When the fourth NAS message is not sent, the first NAS message may be a relocation request message, and a name of the relocation request message may be a NAS registration accept message, a NAS registration reject message, or the like. This is not specifically limited in embodiments. Alternatively, when the first NAS message is not sent, the fourth NAS message (the registration complete message or the registration reject message) may be used to notify the UE that the UE needs to be relocated to the second non-3GPP network device. In this case, the fourth NAS message carries the identification information of the second non-3GPP network device.

In other words, in an example, the first NAS message may be a newly added NAS message, or may be a NAS message in response to the first registration request message, that is, a NAS registration complete message or NAS registration reject message is reused to indicate, to the UE, that the UE needs to be relocated to the second non-3GPP network device.

Optionally, if the registration reject message is sent in step S713, the UE and the AMF need to locally store NAS security contexts, and perform step S714, so that an authentication procedure can be omitted when the UE subsequently requests to re-access the network, thereby reducing signaling overheads.

S714: Store the NAS security contexts.

The NAS security context includes a NAS integrity protection key, a NAS encryption key, and a related negotiated algorithm. A key of the NAS security context is generated based on the root key K_{AMF}.

Optionally, after the terminal device receives the first NAS message from the AMF, the UE performs step S708.

S708: The terminal device sends a first NAS response message to the AMF.

Correspondingly, the AMF receives the first NAS response message from the terminal device.

For example, the terminal device determines, according to the local policy or a preset value method, whether to send the first NAS response message to the AMF. For example, the UE determines, according to the local policy, that the UE does not need to send the first NAS response message For another example, the UE determines, according to the preset value method, that the UE needs to send the first NAS response message.

It should be noted that the first NAS response message may be a relocation response message. For example, a name of the relocation response message may be a NAS N3IWF relocated response message, UL NAS TRANSPORT, a UE configuration update complete message, or the like. It should be understood that the foregoing names are merely examples, and should not constitute any limitation on the technical solutions of this application.

When determining that the UE needs to be relocated to the second non-3GPP network device, the UE performs step S730.

S730: The terminal device sends a second NAS message to the AMF.

Correspondingly, the AMF receives the second NAS message from the terminal device.

The second NAS message is used by the terminal device to request to re-access the network, and the second NAS message includes a first key generation parameter.

It should be understood that the first key generation parameter is a NAS SQN carried in the uplink NAS message. The AMF and the UE may form, based on NAS SQNs and locally stored parameters, uplink NAS COUNT values used to generate first keys K_{N3IWF-2}.

Optionally, the second NAS message may be a service request message or a registration request message. The service request message and the registration request message include second identification information of the terminal device. It should be understood that the second identification information may be an SUCI, and the SUCI is different from the SUCI in step S710; or the second identification information may be a 5G-GUTI, and the 5G-GUTI is the same as the 5G-GUTI (that is, the second 5G-GUTI) in step S710; or the second identification information may be a 5G-GUTI (that is, the first 5G-GUTI) re-delivered by the AMF. In other words, regardless of whether the first identification information is the 5G-GUTI or the SUCI, the second identification information is the 5G-GUTI reallocated by the AMF to the UE.

It should be understood that the second NAS message is protected through the stored NAS security context.

Optionally, before the terminal device sends the second NAS message to the AMF, step S709 is included.

S709: The UE determines that the UE needs to re-access the network via the second non-3GPP network device.

For example, the UE determines, based on the first NAS message and/or the fourth NAS message, that the UE needs to re-access the network via the second non-3GPP network device.

In a possible implementation, the terminal device determines, based on the FQDN information that is of the second non-3GPP network device and that is carried in the first NAS message, that the terminal device needs to re-access the network via the second non-3GPP network device. Further, the UE may determine, according to the local policy or the preset value method, whether to immediately re-access the network via the N3IWF-2, or re-access the network via the N3IWF-2 when an untrusted non-3GPP connection is re-established next time.

For example, if the UE determines to immediately re-access the network via the N3IWF-2, the UE needs to immediately release a connection to the N3IWF-1, and starts to perform step S730. It should be noted that, releasing the connection to the N3IWF-1 by the UE does not cause deletion of the NAS security context. This is because the UE has successfully completed the registration procedure in step S730, and after registration succeeds, the UE continues to store the NAS security context even if the UE returns to an idle state.

In another possible implementation, the terminal device determines, based on the first cause value carried in the first NAS message or the fourth NAS message, that the terminal device needs to re-access the network based on the FQDN information of the second non-3GPP network device; or the terminal device determines, based on the FQDN information that is of the second non-3GPP network device and that is carried in the first NAS message, the second non-3GPP network device that is subsequently used, and determines, based on the first cause value, that the terminal device needs to re-access or immediately access the network via the second non-3GPP network device. It should be noted that an occasion at which the UE accesses the network via the N3IWF-2 is not specifically limited in this application.

For example, the cause value is a binary bit cause value, and a bit "0" indicates that the UE may continue to maintain the current connection to the N3IWF-1, and re-access the network via the N3IWF-2 when an untrusted non-3GPP access technology is used next time. Specifically, if a relocation request message #1 carries "0", the UE needs to store the FQDN information of the N3IWF-2. Time when the UE performs step S809 cannot be determined, and the UE may not use untrusted non-3GPP access in a short period of time, and therefore step S809 is not performed in the short period of time. Optionally, when the relocation request message #1 received by the UE carries "0", the UE may further determine, based on a current status of the UE, the local policy, a manual control method, or the like, to immediately re-access the network via the N3IWF-2. In this case, the UE needs to immediately release the connection to the N3IWF-1, and starts to perform step S730. For example, the cause value is a binary bit cause value, and a bit "1" indicates that the UE needs to immediately re-access the network via the N3IWF-2. Specifically, if the relocation request message #1 carries "1", the UE needs to immediately release the connection to the N3IWF-1, and starts to perform step S730.

In still another possible implementation, the terminal device determines, based on the FQDN information of the second non-3GPP network device, that the terminal device needs to re-access the network via the second non-3GPP network device, and the terminal device stores the FQDN information of the second non-3GPP network device and the first information carried in the first NAS message, where the first information indicates the association information of the FQDN information of the second non-3GPP network device.

For example, the UE preferentially uses the FQDN information of the second non-3GPP network device to find the second non-3GPP network device. If the other information is S-NSSAI #1, it indicates that the FQDN information of the second non-3GPP network device is related to the S-NSSAI #1. If the UE needs to register with a 5GC by using the untrusted non-3GPP access technology and uses the slice S-NSSAI #1, the UE preferentially selects the second non-3GPP network device. Further, the UE may determine, according to the local policy or the preset value method, whether to re-access or immediately access the network via the second non-3 GPP network device, or re-access the network via the second non-3GPP network device when an untrusted non-3GPP connection is re-established next time.

It should be noted that, regardless of whether the UE immediately re-accesses the network via the second non-3GPP network device or subsequently re-accesses the network via the second non-3GPP network device, the UE no longer uses a key K_{N3IWF-1} of the first non-3GPP network device and another key derived from K_{N3IWF-1}. For example, the UE deletes K_{N3IWF-1} and the another key derived from K_{N3IWF-1}, but retains a NAS security key.

Optionally, after the terminal device receives the first NAS message from the AMF, step S711 is included.

S711: The UE determines that the UE needs to re-access or immediately access the network via the second non-3GPP network device.

Optionally, before the terminal device sends the second NAS message to the network, the terminal device determines, according to the local policy or the preset value method, that the terminal device needs to re-access or immediately access the network via the second non-3GPP network device.

The UE determines that the UE needs to re-access the network via the second non-3GPP network device, and the terminal device determines the second non-3GPP network device based on the FQDN information of the second non-3GPP network device or the IP address information of the second non-3 GPP network device; or when the terminal device cannot determine the second non-3GPP network device based on the FQDN information of the second non-3GPP network device or the IP address information of the second non-3GPP network device, the terminal device reselects a third non-3GPP network device.

Further, when the second non-3GPP network device is found, the terminal device performs the following step S730: The terminal device sends the second NAS message to the network via the second non-3GPP network device. Further, when the second non-3GPP network device is not found, the UE sends the second NAS message to the AMF via the third non-3GPP network device. The second NAS message further includes a second cause value, and the second cause value indicates that the terminal device cannot access the network via the second non-3GPP network device.

S740: The AMF generates the first key based on the first key generation parameter.

Similarly, the UE generates the first key based on the first key generation parameter.

The first key is used to establish a secure connection between the second non-3GPP network device and the terminal device.

For example, for a specific implementation of generating the key, refer to related descriptions in the method 400. For example, the AMF forms, based on the first key generation parameter and the locally stored parameter, uplink NAS COUNT used in the NAS message, and generates the key K_{N3IWF-2} based on the root key Kamf and another parameter.

Optionally, before the AMF generates the first key based on the first key generation parameter, the method includes step S709.

S712: The AMF determines whether the second NAS message is received via the second non-3GPP network device.

In a possible implementation, the AMF determines whether information about a non-3GPP network device via which the second NAS message is sent is the same as information that is about the second non-3GPP network device and that is locally stored in the AMF.

For example, the AMF compares the information that is about the non-3GPP network device and that is associated with the second NAS message (for example, FQDN information that is of the non-3GPP network device and that is carried in the second NAS message, or an IP address that is of the non-3GPP network device and that corresponds to the second NAS message) with the information that is about the second non-3GPP network device and that is locally stored in the AMF (for example, the FQDN information of the second non-3GPP network device, or the S-NSSAI information corresponding to the second non-3GPP network device). If the same, the AMF determines that the UE accesses the network via the second non-3GPP network device to which the UE is relocated; or if different, the AMF determines that the UE does not access the network via the second non-3GPP network device to which the UE is relocated.

In a possible implementation, based on determining in step S709, when determining that the UE sends the second NAS message via the second non-3GPP network device, the AMF generates the first key based on the first key generation parameter.

In another possible implementation, the foregoing step S711 may not be performed. The AMF queries the local record, determines whether the AMF has relocated the non-3GPP network device for the first terminal device, and when determining that the AMF has relocated the non-3GPP network device for the UE, skips the determining action, and the AMF directly generates the first key based on the first key generation parameter.

For example, if the AMF determines that the information that is about the non-3GPP network device and that is used by the UE is the same as the information that is about the second non-3GPP network device and that is carried by the AMF in step S720, the AMF generates the first key; or if the local record of the AMF shows that the AMF has allocated a non-3GPP network device for the UE, the AMF may skip the foregoing check process and perform a first key generation action.

For example, if the AMF determines that the information that is about the non-3GPP network device and that is used by the UE is different from the information that is about the second non-3GPP network device and that is carried by the AMF in step S720, or the AMF does not store the information that is about the second non-3GPP network device and that is sent to the UE, the AMF needs to determine whether there is a more appropriate non-3GPP network device that can be used. If there is the more appropriate non-3GPP network device that can be used, step S720 is restarted to be performed; or if there is no more appropriate non-3GPP network device that can be used, step S740 is performed. Alternatively, if the AMF determines that the information that is about the non-3GPP network device and that is used by the UE is different from the information that is about the second non-3GPP network device and that is carried by the AMF in step S720, or the AMF does not store the information that is about the second non-3GPP network device and that is sent to the UE, the UE includes the second cause value in the second NAS message, and the AMF determines, based on the second cause value, that the UE cannot use the second non-3 GPP network device relocated by the AMF for the UE, the AMF no longer relocates a non-3GPP network device for the UE, and step S740 is performed. Alternatively, if the AMF determines that the information that is about the non-3GPP network device and that is used by the UE is different from the information that is about the second non-3GPP network device and that is carried by the AMF in step S720, or the AMF does not store the information that is about the second non-3GPP network device and that is sent to the UE, and the local record shows that the AMF has relocated a non-3GPP network device for the UE, the AMF may skip the foregoing check process and perform step S740.

Based on this implementation, the determining step S711 is performed before the key is generated, so that it can be determined that the UE accesses the network via the second non-3GPP network device allocated by the AMF to the UE, thereby ensuring communication security and better providing user experience for the UE. In comparison, the determining step S711 is not performed before the key is generated, provided that the local record is queried to determine that the non-3GPP network device has been relocated for the UE, and the UE is not limited to accessing the network via the second non-3GPP network device. This can simplify an operation of the AMF when the UE re-accesses the network subsequently, and a network access manner of the UE is more flexible.

In other words, regardless of whether the terminal device sends the second NAS message via the second non-3GPP network device, the AMF generates the first key.

S750: The AMF sends the first key to the second non-3GPP network device.

Correspondingly, the second non-3GPP network device receives the first key from the AMF.

For example, the UE establishes the secure connection to the second non-3GPP network device based on the first key and the identification information of the second non-3GPP network device. For a specific implementation, refer to related descriptions of the method 400. For brevity, details are not described herein again.

In the solution provided in this application, the AMF determines, through determining, that the UE needs to be relocated to, and notifies, through the NAS message, the UE of the information about the second non-3GPP network device to which the UE is relocated, so that the UE re-delivers the NAS message to the AMF via the second non-3GPP network device to initiate a registration service or a request service. The AMF may generate the first key based on the key generation parameter carried in the NAS message sent by the UE, to establish the secure connection between the second non-3GPP network device and the terminal device. This ensures that keys used by the UE to re-access different non-3GPP network devices are different, thereby achieving key isolation and improving network communication security.

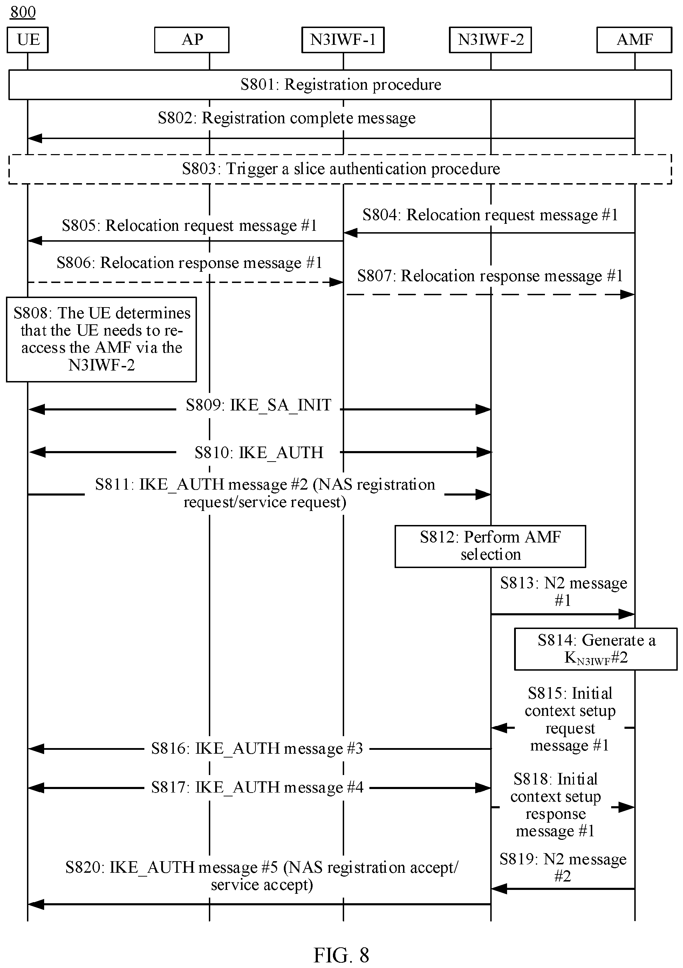

The following uses an untrusted non-3GPP access network as an example to specifically describe a key generation synchronization method in a redirection case with reference to FIG. 8.

FIG. 8 is an example flowchart of a communication method 800 according to an embodiment of this application. As shown in FIG. 8, the method includes the following plurality of steps.

S801: Perform a registration procedure.

For a specific implementation of registration, refer to related descriptions of step S401 to step S426 in the method 400. For example, UE selects an N3IWF-1, and registers with an AMF via the N3IWF-1. For brevity, details are not described herein again. It should be noted that first identification information is carried in the registration procedure. The first identification information may be an SUCI or a 5G-GUTI. The AMF sends a registration success message including a new 5G-GUTI to the UE. Correspondingly, the UE stores the new 5G-GUTI. In the registration procedure, the UE and the AMF generate second keys K_{N3IWF-1} based on second key parameters. The second key parameter is generated as a NAS SQN in an uplink NAS message in a registration request, for example, a NAS SQN in a registration request message or a NAS SMC message. The AMF and the UE generate K_{N3IWF-1} based on uplink NAS COUNT values corresponding to a same NAS SQN. The UE and the AMF establish an IPsec based on the K_{N3IWF-1}.

It should be additionally noted that, compared with the related description in the method 400, in this method, after the AMF receives a registration request from the UE via the N3IWF-1, between step S419 and step S423, the AMF determines whether the UE needs to be relocated to another N3IWF, that is, determines whether the UE needs to access the AMF or another AMF via the another N3IWF. For example, in this implementation, the AMF determines that the UE needs to be relocated to a N3IWF-2.

In a possible implementation, the AMF may determine, based on information about a slice requested by the UE for access, whether to relocate the UE to the another N3IWF. For example, if the AMF finds that one or more other N3IWFs are more appropriate than the N3IWF-1 to provide a slice service for the UE, the AMF may determine to relocate the UE to a N3IWF that can serve the slice. For example, when there are a plurality of N3IWFs that can serve the UE, the AMF may randomly select one N3IWF, or the AMF selects a most appropriate N3IWF based on other information (for example, a current location of the UE) of the UE. On the contrary, if the AMF does not find that one or more other N3IWFs are more appropriate than the N3IWF-1 to provide a slice service for the UE, and the AMF determines that the N3IWF-1 can currently serve the slice, the AMF considers the N3IWF-1 as an optimal selection, and continues a subsequent registration procedure.

In another possible implementation, the AMF may determine, based on geographic location information of the N3IWF-1, whether to relocate the UE to the another N3IWF. For example, if the AMF finds that one or more other N3IWFs are more appropriate than the N3IWF-1 to serve the UE, the AMF may determine to relocate one N3IWF for the UE. For example, when there are a plurality of N3IWFs that can serve the UE, the AMF may randomly select one N3IWF, or the AMF selects a most appropriate N3IWF based on other information (for example, a current location of the UE) of the UE. On the contrary, if the AMF does not find that one or more other N3IWFs are more appropriate than the N3IWF-1 to serve the UE, and the AMF determines that the current N3IWF-1 can serve the UE, the AMF considers the N3IWF-1 as an optimal selection, and continues a subsequent registration procedure.

In still another possible implementation, the AMF may further determine, based on the information about the slice requested by the UE for access and the geographic location information of the N3IWF-1, whether to relocate the UE to the another N3IWF. A specific implementation is similar to the foregoing manner, and details are not described herein again.

In still another possible implementation, the AMF may determine, based on local pre-configuration information, whether to relocate the UE to the another N3IWF. For example, a list of a relationship between the N3IWF and S-NSSAI is locally pre-configured. When the UE uses S-NSSAI but does not use a corresponding N3IWF in the list, the AMF determines that the UE needs to be relocated to the another N3IWF. The local pre-configuration information may be configured for the AMF via a network management system. After receiving the pre-configuration information, the AMF stores the pre-configuration information.

Optionally, if the AMF finds one or more other N3IWFs that are more appropriate, the AMF may also determine not to relocate the UE to an N3IWF that can serve the slice. For example, the one or more N3IWFs that can serve the UE are already overloaded, and are not appropriate for being accessed by more UEs. The AMF may consider the N3IWF-1 as an optimal selection, and continue a subsequent registration procedure.

For example, in this embodiment of this application, the AMF determines to relocate the UE to the N3IWF-2.

It should be noted that the AMF may determine, according to a local policy, whether to perform the determining action, that is, determine whether the UE needs to be relocated to the another N3IWF. For example, the local policy may be a switch option. For example, if the switch is selected as on, the AMF performs the determining action; or if the switch is selected as off, the AMF does not perform the determining action. For another example, the local policy may also be pre-configuration information. If the AMF has the pre-configuration information, the determining action is performed; otherwise, the determining action is not performed. The local policy may also be a local record, and the local record may be a part of a UE context. If the local record shows that the UE has performed the action, the action is not performed; otherwise, the action is performed.

S802: The AMF sends a registration complete message to the UE.

Correspondingly, the UE receives the registration complete message from the AMF.

Based on the foregoing steps S801 and S802, the UE and the AMF complete the registration procedure. In addition, the AMF determines to relocate the N3IWF-2 for the UE.

It should be noted that when determining that the N3IWF-2 needs to be relocated for the UE, the AMF performs the following steps S803 to S820. On the contrary, when determining that the N3IWF-2 does not need to be relocated for the UE, the AMF does not perform the following steps S803 to S820.

S803: Optionally, the AMF triggers a slice authentication procedure.

For a specific slice authentication procedure, refer to related descriptions in chapter 16 in the 3GPP standard TS 33.501. For brevity, details are not described herein again.

It should be noted that if the AMF determines, from a perspective of a slice, that a more appropriate N3IWF (for example, N3IWF-2) serves the UE, to prevent a failure of an entire AMF access procedure because the UE cannot pass slice authentication when the UE performs a procedure of re-accessing the AMF via the N3IWF-2 immediately after the AMF relocates the N3IWF-2 for the UE, resulting in a waste of resources. Therefore, before the AMF determines to relocate the N3IWF-2 for the UE, whether the UE can use the slice may be first determined through slice authentication, to avoid an unnecessary waste of resources. In other words, step S803 is first performed, and step S804 is performed when it is ensured that slice authentication of the UE succeeds.

Optionally, whether the slice authentication procedure is performed may depend on the local policy.

Optionally, the slice authentication procedure may be alternatively performed after the N3IWF-2 relocation procedure is completed. In other words, steps S804 to S807 are first performed, and then step S803 is performed. This is not specifically limited in this application.

S804: The AMF sends a relocation request message #1 (that is, a first NAS message) to the N3IWF-1.

Correspondingly, the N3IWF-1 receives the relocation request message #1 from the AMF.

Specifically, the relocation request message #1 includes IP information of the one or more N3IWFs, FQDN information of the one or more N3IWFs, or information used to find the one or more N3IWFs. In this implementation, an example in which the relocation request message #1 carries the FQDN information of one N3IWF-2 is used for description. It should be understood that a quantity of N3IWFs-2 and a location of the N3IWF-2 are not specifically limited in this application.

Optionally, the relocation request message #1 further includes a cause value (cause value) (that is, a first cause value). The cause value may indicate that the UE needs to immediately access the AMF via the N3IWF-2, or indicate that the UE accesses the AMF via the N3IWF-2 in a subsequent procedure, or indicate that the UE needs to re-access the AMF or needs to perform re-registration based on the FQDN information that is of the N3IWF-2 and that is carried in the relocation request message #1.

Optionally, the relocation request message #1 further includes other information (that is, first information). The other information notifies the UE of information associated with the FQDN information of the N3IWF-2, for storage and subsequent use by the UE. For example, the other information is slice information (for example, slice information S-NSSAI#1 corresponding to the N3IWF-2). For another example, the other information is storage indication information, used to notify the UE that the stored information is preferentially used for subsequent access.

It should be noted that the relocation request message #1 is a NAS message, and security protection may be performed based on a NAS security context in step S801. For example, a name of the relocation request message #1 may be a NAS N3IWF relocated request message, DL NAS TRANSPORT, a UE configuration update command message, or the like. It should be understood that the names of the foregoing relocation request message #1 are merely examples, and should not constitute any limitation on the technical solutions of this application.

S805: The N3IWF-1 forwards the relocation request message #1 to the UE.

Correspondingly, the UE receives the relocation request message #1 from the N3IWF-1.

S806: Optionally, the UE sends a relocation response message #1 to the N3IWF-1.

Correspondingly, the N3IWF-1 receives the relocation response message #1 from the UE.

For example, the UE may determine, according to the local policy or a preset value method, whether to send the relocation response message #1. For example, the UE determines, according to the local policy, that the UE does not need to send the relocation response message #1. For another example, the UE determines, according to the preset value method, that the UE needs to send the relocation response message #1.

It should be noted that, in the foregoing steps S805 and S806, a prerequisite for information exchange between the UE and the N3IWF-1 is establishment of an IPsec SA. In other words, both the relocation request message #1 in step S805 and the relocation response message #1 in step S806 are transmitted in an IPsec tunnel. The IPsec tunnel is successfully established after the registration procedure in step S801 is completed. The IPsec SA is established by the UE and the N3IWF-1 based on the obtained key K_{N3IWF-1} of the N3IWF-1. For a specific implementation of a method for generating the K_{N3IWF}, refer to related descriptions mentioned in steps S418 and S425 in the method 400. For brevity, details are not described herein again.

It should be noted that the relocation response message #1 is a NAS message, and security protection may be performed based on the NAS security context in step S801. For example, a name of the relocation response message #1 may be a NAS N3IWF relocated response message, UL NAS TRANSPORT, a UE configuration update complete message, or the like. It should be understood that the names of the foregoing relocation response message #1 are merely examples, and should not constitute any limitation on the technical solutions of this application.

S807: Optionally, the N3IWF-1 forwards the relocation response message #1 to the AMF.

Correspondingly, the AMF receives the relocation response message #1 from the N3IWF-1.

It should be noted that if step S806 is performed, step S807 needs to be performed.

S808: The UE determines that the UE needs to re-access the AMF via the N3IWF-2.

For example, the UE determines, based on the relocation request message #1 in step S805, that the UE needs to re-access the AMF via the N3IWF-2.

In a possible implementation, when the relocation request message #1 in step S805 carries only the FQDN information of the N3IWF-2, the UE determines, based on the FQDN information of the N3IWF-2, that the UE needs to re-access the AMF via the N3IWF-2. Further, the UE may determine, according to the local policy or the preset value method, whether to immediately re-access the AMF via the N3IWF-2, or re-access the AMF via the N3IWF-2 when an untrusted non-3GPP connection is re-established next time.

For example, if the UE determines to immediately re-access the AMF via the N3IWF-2, the UE needs to immediately release a connection to the N3IWF-1, and starts to perform step S809. It should be understood that the UE releases the connection to the N3IWF-1 after entering an idle state. It should be noted that, releasing the connection to the N3IWF-1 by the UE does not cause deletion of the NAS security context. This is because the UE has successfully completed the registration procedure in step S801, and after registration succeeds, the UE continues to store the NAS security context even if the UE returns to the idle state.

In another possible implementation, when the relocation request message #1 in step S805 carries the FQDN information of the N3IWF-2 and the cause value, the UE determines, based on the cause value, that the UE needs to re-access the AMF based on the FQDN information of the N3IWF-2. Alternatively, the UE determines, based on the FQDN information of the N3IWF-2, a subsequently used N3IWF-2, and then determines, based on the cause value, whether to immediately re-access the AMF via the N3IWF-2, or re-access the AMF via the N3IWF-2 when an untrusted non-3GPP connection is re-established next time, or determines, based on the cause value, that re-registration is required. The UE determines, based on the FQDN information of the N3IWF-2, the subsequently used N3IWF-2.

For example, the cause value is a binary bit cause value, and a bit "0" indicates that the UE may continue to maintain the current connection to the N3IWF-1, and re-access the AMF via the N3IWF-2 when an untrusted non-3GPP access technology is used next time. Specifically, if the relocation request message #1 carries "0", the UE needs to store the FQDN information of the N3IWF-2. Time when the UE performs step S809 cannot be determined, and the UE may not use untrusted non-3GPP access in a short period of time, and therefore step S809 is not performed in the short period of time. Optionally, when the relocation request message #1 received by the UE carries "0", the UE may further determine, based on a current status of the UE, the local policy, a manual control method, or the like, to immediately re-access the AMF via the N3IWF-2. In this case, the UE needs to immediately release the connection to the N3IWF-1, and starts to perform step S809.

For example, the cause value is a binary bit cause value, and a bit "1" indicates that the UE needs to immediately re-access the AMF via the N3IWF-2. Specifically, if the relocation request message #1 carries "1", the UE needs to immediately release the connection to the N3IWF-1, and starts to perform step S809.

In still another possible implementation, when the relocation request message #1 in step S805 carries the FQDN information of the N3IWF-2 and the other information, the UE determines, based on the FQDN information of the N3IWF-2, that the UE needs to re-access the AMF via the N3IWF-2, and stores the FQDN information of the N3IWF-2 together with the other information. When the UE subsequently performs re-accessing by using the untrusted non-3GPP technology, the UE preferentially selects the N3IWF-2 to access the AMF.

For example, the UE preferentially uses the FQDN information of the N3IWF-2 to find the N3IWF-2. If the other information is S-NSSAI#1, the FQDN information of the N3IWF-2 is related to the S-NSSAI#1. If the UE needs to register with a 5GC by using the untrusted non-3GPP access technology and uses the slice S-NSSAI #1, the UE preferentially selects the N3IWF-2. Further, the UE may determine, according to the local policy or the preset value method, whether to immediately perform re-accessing via the N3IWF-2, or perform re-accessing via the N3IWF-2 when an untrusted non-3GPP connection is re-established next time. For example, if determining to immediately re-access the AMF via the N3IWF-2, the UE needs to immediately release the connection to the N3IWF-1, and starts to perform step S809.

It should be noted that regardless of whether the UE immediately re-accesses the AMF via the N3IWF-2 or subsequently re-accesses the AMF via the N3IWF-2, the UE no longer uses the key K_{N3IWF-1} of the N3IWF-1 and another key derived from K_{N3IWF-1}. For example, the UE deletes K_{N3IWF-1} and the another key derived from K_{N3IWF-1}, but retains a NAS security key. Next, with reference to steps S809 to S820, a procedure in which the UE re-registers with the AMF via the N3IWF-2 (or requests a service from the AMF via the N3IWF-2) is described. The procedure may be understood as follows: The UE immediately accesses the AMF via the N3IWF-2; or the UE accesses the AMF via the N3IWF-2 after a period of time after the UE releases the connection to the N3IWF-1; or the UE releases the connection to the N3IWF-1 when the UE needs to re-establish the untrusted non-3GPP connection subsequently and re-accesses the AMF via the N3IWF-2. In other words, an occasion at which the UE accesses the AMF via the N3IWF-2 is not specifically limited in this application.

S809: The UE performs IKE_SA_INIT exchange with the N3IWF-2.

Before the UE sends a message to the N3IWF-2, the UE needs to determine (or access) the N3IWF-2. In a possible implementation, the UE determines IP address information of the N3IWF-2 based on information carried in a reconfiguration request message #1. For example, the UE determines the N3IWF-2 based on FQDN information or IP address information that is of the N3IWF-2 and that is carried in the reconfiguration request message #1.

In an exception, if the UE cannot obtain the IP address information of the N3IWF-2 based on the FQDN information of the N3IWF-2, or the UE cannot access the N3IWF-2 based on the IP address information of the N3IWF-2, the UE needs to reselect an N3IWF-2' for access. In this case, the N3IWF-2 in this embodiment is replaced with the N3IWF-2'.

For example, the UE first finds the N3IWF-2 based on the FQDN information of the N3IWF-2 in step S805, and then performs IKE_SA_INIT exchange with the N3IWF-2. For a specific implementation of IKE_SA_INIT exchange, refer to step S403 in the method 400. For brevity, details are not described herein again.

S810: The N3IWF-2 performs IKE_AUTH exchange with the UE.

For example, the N3IWF-2 sends an IKE_AUTH message #1 to the UE, and receives an IKE_AUTH message #1' from the UE. Correspondingly, the UE receives the IKE_AUTH message #1 from the N3IWF-2, and sends the IKE_AUTH message #1' to the N3IWF-2.

For a specific implementation of IKE_AUTH exchange, refer to steps S404 and S405 in the method 400. For brevity, details are not described herein again.

S811: The UE sends an IKE_AUTH message #2 to the N3IWF-2.

Correspondingly, the N3IWF-2 receives the IKE_AUTH message #2 from the UE.

The IKE_AUTH message #2 includes a NAS registration request message (for example, a NAS registration request message), a NAS service request message (for example, a NAS service request message), a NAS registration request message. Alternatively, the NAS service request message carries second identification information of the UE. It should be understood that the NAS registration request message or the NAS service request message further carries an SQN, used to determine a NAS COUNT value. The second identification information is the new 5G-GUTI in step S801.

It should be noted that, because the UE has successfully registered with the AMF in step S801, the UE and the AMF have a same NAS security context. Therefore, an UE identifier carried in the NAS registration request message or the NAS service request message in step S811 is the 5G-GUTI. It should be understood that integrity protection is performed on the NAS registration request message or the NAS service request message.

Optionally, if the UE performs accessing via the N3IWF-2', the UE includes the cause value #2 in the NAS message, and the cause value #2 notifies the AMF that the UE does not use the N3IWF-2 that is relocated by the AMF.

S812: The N3IWF-2 performs AMF selection.

For a specific implementation, refer to step S407 in the method 400. For brevity, details are not described herein again.

S813: The N3IWF-2 sends an N2 message #1 to the AMF.

Correspondingly, the AMF receives the N2 message #1 from the N3IWF-2.

The N2 message #1 includes the NAS registration request message or the NAS service request message.

Optionally, after determining the N3IWF-2 that is relocated for the UE in step S801, the AMF may locally store information about the N3IWF-2 for subsequent verification performed by the AMF (for example, step S813); or the AMF may locally mark that the N3IWF-2 has been relocated for the UE. There are a plurality of local recording manners. For example, a flag bit is used. If the flag bit is 0, it indicates that the N3IWF has not been relocated for the UE; or if the flag bit is 1, it indicates that the N3IWF has been relocated for the UE.

Optionally, the AMF checks and determines that the UE performs accessing via the N3IWF-2 that is relocated by the AMF for the UE.

In a possible implementation, the AMF compares information that is about the N3IWF and that is associated with the N2 message #1 (for example, FQDN information that is of the N3IWF and that is carried in the N2 message, or an IP address that is of the N3IWF and that corresponds to the N2 message) with the information that is about the N3IWF-2 and that is locally stored in the AMF (for example, the FQDN information of the N3IWF-2, or the S-NSSAI information corresponding to the N3IWF-2), and determines whether the UE re-accesses the AMF via the N3IWF-2 based on whether comparison results are the same. For example, if the same, the AMF determines that the UE performs accessing via the N3IWF-2 to which the UE is relocated; or if different, the AMF determines that the UE does not perform accessing via the N3IWF-2 to which the UE is relocated.

In another possible implementation, after the AMF receives the N2 message #1 from the N3IWF-2, the AMF queries whether there is a local record showing that the N3IWF-2 has been relocated for the UE. If the local record exists, the AMF skips the foregoing determining process, and performs step S814.

Further, after the foregoing comparison or querying, if the AMF determines that the information that is about the N3IWF-2 and that is used by the UE is the same as the information that is about the N3IWF-2 and that is carried by the AMF in step S804, the AMF performs step S814; or if a local record of the AMF shows that one N3IWF has been relocated for the UE, the AMF may skip the foregoing check process and perform step S814. It should be understood that, in this implementation, K_{N3IWF-2} generated by the AMF for the UE is a key corresponding to the N3IWF-2 that is relocated by the AMF for the UE.

Optionally, if the AMF determines that the information that is of the N3IWF-2 and that is used by the UE is different from the information that is of the N3IWF-2 and that is carried by the AMF in step S804, or the AMF does not store the information that is of the N3IWF-2 and that is sent to the UE, the AMF needs to determine whether there is a more appropriate N3IWF that can be used. If there is the more appropriate N3IWF that can be used, steps S804 to S812 are restarted to be performed. If there is no more appropriate N3IWF that can be used, step S814 is performed. Alternatively, if the AMF determines that the information that is of the N3IWF-2 and that is used by the UE is different from the information that is of the N3IWF-2 and that is carried by the AMF in step S804, or the AMF does not store the information that is of the N3IWF-2 and that is sent to the UE, the UE includes a cause value #2 in the N2 message #1, and the AMF determines, based on the cause value #2, that the UE cannot use the N3IWF-2 that is relocated by the AMF for the UE, the AMF no longer relocates an N3IWF for the UE, step S814 is performed. Alternatively, if the AMF determines that the information that is of the N3IWF-2 and that is used by the UE is different from the information that is of the N3IWF-2 and that is carried by the AMF in step S804, or the AMF does not store the information that is of the N3IWF-2 and that is sent to the UE, and a local record shows that the AMF has relocated an N3IWF for the UE, the AMF may skip the foregoing check process, and perform step S814. It should be understood that, in this implementation, K_{N3IWF-2} generated by the AMF for the UE is a key corresponding to the N3IWF-2 used by the UE, and is not the key corresponding to the N3IWF-2 that is relocated by the AMF for the UE.

According to the foregoing method, a problem of an infinite loop that the AMF repeatedly performs the determining action and continuously enables the UE to re-access is avoided. Once the cyclic problem occurs, the UE cannot access the network.

It should be understood that, based on the foregoing steps S801 and S803, the AMF knows that the UE needs to re-access the network via the N3IWF-2. Therefore, after receiving the N2 message #1 in step S813, the AMF needs to generate a new key, that is, the key K_{N3IWF-2} of the N3IWF-2, and notify the N3IWF-2 of the generated K_{N3IWF-2}, to perform identity authentication, a key protocol, and the like between the UE and the N3IWF-2, to establish IPsec SA security protection between the UE and the N3IWF-2, that is, perform steps S814 to S817.

S814: The AMF generates K_{N3IWF-2}.

Specifically, the AMF generates new K_{N3IWF-2} based on a first key generation parameter carried in an uplink NAS message sent by the UE. The first key generation parameter is an SQN in the uplink NAS message.

Optionally, if the AMF does not trigger a NAS SMC procedure after step S811 is performed, the uplink NAS message is the NAS registration request message in S811, and the AMF generates K_{N3IWF-2} based on an uplink NAS COUNT value corresponding to the SQN carried in the NAS registration request message or the NAS service request message in step S811.

Optionally, if the AMF triggers the NAS SMC procedure between step S811 and step S814, the uplink NAS message is that the AMF generates K_{N3IWF-2} based on an uplink NAS COUNT value corresponding to an SQN in a NAS security mode complete (security mode complete, SMP) message.

For a specific implementation of generating K_{N3IWF-2}, refer to related descriptions of step S418 in the method 400. For brevity, details are not described herein again.

S815: The AMF sends an initial context setup request message #1 to the N3IWF-2.

Correspondingly, the N3IWF-2 receives the initial context setup request message #1 from the AMF.

The initial context setup request message #1 includes the key K_{N3IWF-2}.

S816: The N3IWF-2 sends an IKE_AUTH message #3 to the UE.

Correspondingly, the UE receives the IKE_AUTH message #3 from the N3IWF-2.

The IKE_AUTH message #3 includes EAP-Success. In this case, an EAP-5G session between the UE and the N3IWF-2 is completed.

Further, after receiving the IKE_AUTH message #3, the UE generates the key K_{N3IWF-2} of the N3IWF-2. Optionally, before receiving the IKE_AUTH message #3, the UE may generate the key K_{N3IWF-2} of the N3IWF-2. For a specific implementation of generating K_{N3IWF-2}, refer to step S814. For brevity, details are not described herein again. It should be understood that K_{N3IWF-2} generated by the UE is the same as K_{N3IWF-2} generated by the AMF.

S817: The UE performs IKE_AUTH exchange with the N3IWF-2 based on an IKE_AUTH message #4.

The IKE_AUTH message #4 carries a UE ID and an AUTH payload, and the IKE_AUTH message #4 is used by the UE to establish the IPsec SA with the N3IWF-2. For a specific implementation, refer to the description about establishing the IPsec SA between the UE and the N3IWF-1 in step S425 in the method 400. For brevity, details are not described herein again.

S818: The N3IWF-2 sends an initial context setup response message #1 to the AMF.

Correspondingly, the AMF receives the initial context setup response message #1 from the N3IWF-2.

S819: The AMF sends an N2 message #2 to the N3IWF-2.

Correspondingly, the N3IWF-2 receives the N2 message #2 from the AMF.

The N2 message #2 includes a NAS registration accept message (for example, a NAS registration accept message) or a NAS service accept message (for example, a NAS service accept message).

S820: The N3IWF-2 sends an IKE_AUTH message #5 to the UE.

Correspondingly, the UE receives the IKE_AUTH message #5 from the N3IWF-2.

The IKE_AUTH message #5 includes a NAS registration accept message or a NAS service accept message.

It should be noted that, for a specific implementation of steps S815 to S820, refer to steps S423 to S428 in the method 400. For brevity, details are not described herein again.

According to the method disclosed in this application, after a first registration procedure, the AMF determines, through determining, that the UE needs to be relocated to the N3IWF-2, and notifies, based on the NAS message, the UE of information about the N3IWF-2 to which the UE is relocated, so that the UE re-initiates a registration service or a request service to the AMF via the N3IWF-2. Because the uplink NAS message such as the registration request message or the NAS SMC message is sent in a new registration procedure, the AMF may generate new K_{N3IWF-2} based on the first key generation parameter carried in the uplink NAS message sent in the new registration procedure. The first key generation parameter is the NAS SQN carried in the uplink NAS message. The AMF and the UE form, based on first key generation parameters and locally stored parameters, uplink NAS COUNT used to generate the key K_{N3IWF-2}. In this implementation, the UE registers with a same AMF twice, and because different uplink NAS messages are triggered, the AMF and the UE sequentially generate two different keys used on the N3IWF, for example, K_{N3IWF-1} and K_{N3IWF-2}, to achieve key isolation of K_{N3IWF}.

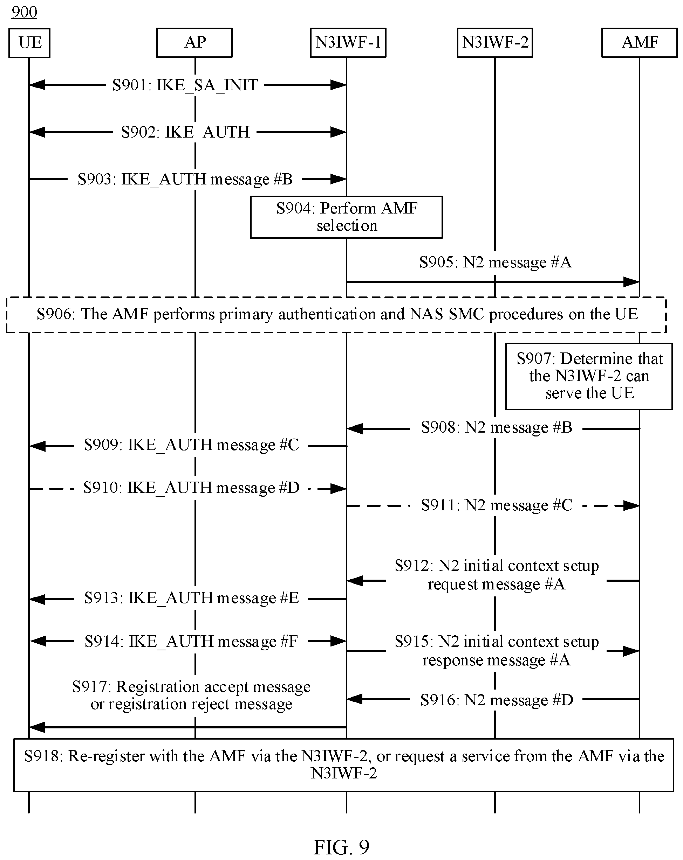

FIG. 9 is an example flowchart of a communication method 900 according to an embodiment of this application. Compared with the method 800 in which the information about the N3IWF-2 is sent after the registration procedure is completed, in the method 900, in a first registration procedure, information about a N3IWF-2 is sent to UE via a new NAS message, or the information about the N3IWF-2 is sent to the UE via a NAS registration accept message or a NAS registration reject message. This manner can improve efficiency and enhance user experience. As shown in FIG. 9, the method includes the following plurality of steps.

S901: UE performs IKE_SA_INIT#A exchange with a N3IWF-1.

S902: The N3IWF-1 performs IKE_AUTH exchange with the UE.

For example, the UE sends an IKE_AUTH message #A to the N3IWF-1, and receives an IKE_AUTH message #A' from the N3IWF-1.

Correspondingly, the N3IWF-1 receives the IKE_AUTH message #A from the UE, and sends the IKE_AUTH message #A' to the UE.

S903: The UE sends an IKE_AUTH message #B to the N3IWF-1.

Correspondingly, the N3IWF-1 receives the IKE_AUTH message #B from the UE.

The IKE_AUTH message #B includes a NAS registration request message #A. For example, the IKE_AUTH message #B includes an EAP-Response/5G-NAS data packet, and the NAS registration request message #A may be carried in the EAP-Response/5G-NAS data packet. The registration request message #A carries first identification information. The first identification information may be an SUCI or a 5G-GUTI.

S904: The N3IWF-1 performs AMF selection.

S905: The N3IWF-1 sends an N2 message #A to an AMF.

Correspondingly, the AMF receives the N2 message #A from a N3IWF-2.

The N2 message #A includes the NAS registration request message #A.

For a specific implementation of steps S901 to S905, refer to steps S403 to S408 in the method 400. For brevity, details are not described herein again.

S906: Optionally, the AMF performs primary authentication and NAS SMC procedures on the UE.

It should be understood that, to ensure network security, the AMF needs to perform the primary authentication (primary authentication) procedure on a terminal device that accesses a network, that is, perform identity authentication and authorization on the terminal device. For a specific implementation of primary authentication, refer to steps S411 to S422 in the method 400. For brevity, details are not described herein again.

S907: The AMF determines that the N3IWF-2 can serve the UE.

For example, when the AMF determines that the UE has permission to use a slice, and the N3IWF-1 does not support a slice service of the UE, the AMF needs to relocate, for the UE, an N3IWF that supports the slice, for example, the N3IWF-2. For a specific implementation in which the AMF determines that the UE needs to be relocated to the N3IWF-2, refer to step S801 in the method 800. For performing slice authentication on the UE by the AMF, refer to step S803. For brevity, details are not described herein again.

S908: The AMF sends an N2 message #B to the N3IWF-1.

Correspondingly, the N3IWF-1 receives the N2 message #B from the AMF.

The N2 message #B carries a relocation request message #1. For the relocation request message #1, refer to related descriptions in step S804 in the foregoing method 800. For brevity, details are not described herein again.

S909: The N3IWF-1 sends an IKE_AUTH message #C to the UE.

Correspondingly, the UE receives the IKE_AUTH message #C from the N3IWF-1.

The IKE_AUTH message #C is an IKE_AUTH response (EAP-Req/5G-NAS/NAS-PDU) message, and the NAS-PDU includes the relocation request message #1 in step S908.

S910: Optionally, the UE sends an IKE_AUTH message #D to the N3IWF-1.

The IKE_AUTH message #D carries a relocation response message #1. For a specific implementation in which the UE determines whether to send the relocation response message #1, refer to step S806 in the foregoing method 800. For brevity, details are not described herein again.

S911: Optionally, the N3IWF-1 sends an N2 message #C to the AMF.

Correspondingly, the AMF receives the N2 message #C from the N3IWF-1.

The N2 message #C carries the relocation response message #1.

It should be noted that if step S910 is performed, step S911 also needs to be performed. For a specific implementation, refer to related descriptions of step S807 in the method 800. For brevity, details are not described herein again.

It should be noted that the relocation request message #1 and the relocation response message #1 are new NAS messages.

Further, after the UE receives the relocation request message #1 in step S909, the UE determines that the UE needs to re-access the AMF via the N3IWF-2. For a specific implementation, refer to related descriptions of step S808 in the method 800. For brevity, details are not described herein again.

S912: The AMF sends an N2 initial context setup request message #A to the N3IWF-1.

Correspondingly, the N3IWF-1 receives the N2 initial context setup request message #Afrom the AMF.

The N2 initial context setup request message #A includes a key K_{N3IWF-1} of the N3IWF-1. For a method for generating K_{N3IWF-1}, refer to related descriptions in step S801. For brevity, details are not described herein again.

S913: The N3IWF-1 sends an IKE_AUTH message #E to the UE.

Correspondingly, the UE receives the IKE_AUTH message #E from the N3IWF-1.

The IKE_AUTH message #E is an IKE_AUTH Response (EAP-Success) message. In this case, an EAP-5G session between the UE and the N3IWF-1 is completed.

S914: The UE performs IKE_AUTH exchange with the N3IWF-1 based on an IKE_AUTH message #F.

The IKE_AUTH message #F includes a UE ID and an AUTH payload. The IKE_AUTH message #F is used by the UE to establish an IPsec SA with the N3IWF-1.

S915: The N3IWF-1 sends an N2 initial context setup response message #A to the AMF.

Correspondingly, the AMF receives the N2 initial context setup response message #A from the N3IWF-1.

The N2 initial context setup response message #A is used to notify that a UE context has been created.

Based on the foregoing steps S908 to S915, a NAS security context between the UE and the N3IWF-1 has been created.

It should be noted that steps S908 to S911 may be understood as follows: The AMF notifies, based on the new NAS message, the UE of information indicating that the UE needs to be relocated to the N3IWF-2. Steps S912 to S915 may be understood as follows: The AMF notifies the UE of the key of the N3IWF-1 based on the N2 message and the IKE_AUTH message, so that IPsec SA security protection is established between the UE and the N3IWF-1.

S916: The AMF sends an N2 message #D to the N3IWF-1.

Correspondingly, the N3IWF-1 receives the N2 message #D from the AMF.

The N2 message #D includes a NAS registration accept message or registration reject message.

Optionally, if the 5G-GUTI is carried by the UE in step S903, the AMF reallocates a 5G-GUTI to the UE, and includes the 5G-GUTI in the registration accept message or the NAS registration reject message. Optionally, if the SUCI is carried by the UE in step S903, the AMF allocates a 5G-GUTI to the UE, and includes the 5G-GUTI in the NAS registration accept message or the registration reject message. In addition, the AMF stores the NAS security context of the UE.

Compared with the conventional technology, in this implementation, after sending the NAS registration reject message, the AMF does not delete the security context related to the UE. When receiving the NAS registration reject message, the UE does not delete the NAS security context either. This is because the UE may immediately re-access the AMF. If the NAS security context of the UE is deleted, when the UE performs accessing next time, the AMF needs to re-execute the primary authentication procedure and the NAS SMC procedure in step S906. This wastes signaling overheads, prolongs access time, and reduces network efficiency. Therefore, after the NAS registration reject message is sent, the security context of the UE is still stored, thereby reducing signaling overheads and accelerating a registration process of the UE.

S917: The N3IWF-1 forwards the registration accept message or the registration reject message to the UE.

Correspondingly, the UE receives the registration accept message or the registration reject message from the N3IWF-1.

It should be noted that the foregoing steps S908 to S911 may be performed, or may not be performed.

In a possible implementation, if step S908 to step S911 are not performed, the NAS registration accept message or the NAS registration reject message sent by the AMF in step S916 and step S917 carries one or more of IP address information of one or more N3IWFs, FQDN information of the one or more N3IWFs, a cause value, and other information. For details, refer to related descriptions in step S804 of the method 800. In this case, the UE verifies integrity protection of the NAS registration accept message or the NAS registration reject message, and after verification succeeds, determines to re-access the AMF via the N3IWF-2, that is, performs step S918. In this implementation, information about the N3IWF-2 is transmitted after IPsec security protection is established between the UE and the N3IWF-1 in steps S912 to S915.

In other words, in this implementation, the NAS registration accept message or the NAS registration reject message may be considered as another representation form of the relocation request message #1.

In another possible implementation, when step S908 to step S911 are performed, the NAS registration accept message or the NAS registration reject message sent by the AMF in step S916 and step S917 may not carry any information, or may carry a cause value. The cause value indicates that the UE needs to re-access the AMF, or indicates the UE to access the AMF via the N3IWF to which the UE is relocated. For example, the UE determines, based on the cause value, that the UE needs to re-access the AMF via the N3IWF-2, that is, performs step S918.

It should be noted that, for a specific implementation of steps S912 and S917, refer to steps S423 to S428 in the method 400. For brevity, details are not described herein again.

Based on the primary authentication procedure and the NAS SMC procedure in step S906, the UE may determine authenticity of the N3IWF-1, and then determine, based on step S909, authenticity of re-accessing the AMF via the N3IWF-2. In other words, the UE determines that the UE needs to re-access the AMF via the N3IWF-2. For a specific implementation in which the UE determines that the UE needs to perform re-accessing via the N3IWF-2, refer to step S808 in the method 800. For brevity, details are not described herein again. Optionally, that the UE needs to perform re-accessing via the N3IWF-2 may be performed between steps S909 and S910, or may be performed after step S917. This is not specifically limited in this application. Further, the UE re-accesses the AMF via the N3IWF-2, that is, performs step S918.

S918: The UE requests re-registration with the AMF again via the N3IWF-2, or the UE requests a service from the AMF via the N3IWF-2.

For a specific implementation, refer to step S809-S820 in the method 800. For brevity, details are not described herein again. It should be noted that second identification information is used in the registration process. The second identification information may be a new SUCI, or a new 5G-GUTI received by the UE in step S917, or the 5G-GUTI carried in step S903.

According to the method disclosed in this application, in a first registration procedure, the AMF determines that the UE needs to be relocated to the N3IWF-2, and sequentially sends, to the UE through the new NAS message, the information about the N3IWF-2 to which the UE is relocated and K_{N3IWF-1} before sending the registration complete message or the registration reject message, so that the UE can directly re-access the AMF via the N3IWF-2 after registering with the AMF, and an EAP-5G procedure between the UE and the N3IWF-2 does not need to be additionally performed, thereby reducing unnecessary signaling overheads. Alternatively, after the UE establishes security protection with the N3IWF-1, the UE sends the registration complete message or the registration reject message including the information about the N3IWF-2 to the UE, to indicate the UE to re-access the AMF via the N3IWF-2. In this implementation, network access efficiency of the UE is improved, and it is ensured that the AMF and the UE sequentially generate two different keys, for example, K_{N3IWF-1} and K_{N3IWF-2}, to achieve isolation of the key K_{N3IWF}.

For a specific scenario, current TNGF (or N3IWF) information (for example, an address or a key of the TNGF (or N3IWF)) may be transferred in a NAS SMC message, or may be transferred in an IKEv2 message. However, the AMF may not send the NAS SMC message. In this case, the AMF cannot notify, through the NAS SMC message, the UE of address information of the TNGF (or N3IWF) to which the UE is reallocated. However, if the TNGF (or N3IWF) information is placed in the IKEv2 message, the UE may not determine authenticity of the redirection message because no security protection is established between the UE and the TNGF (or N3IWF).

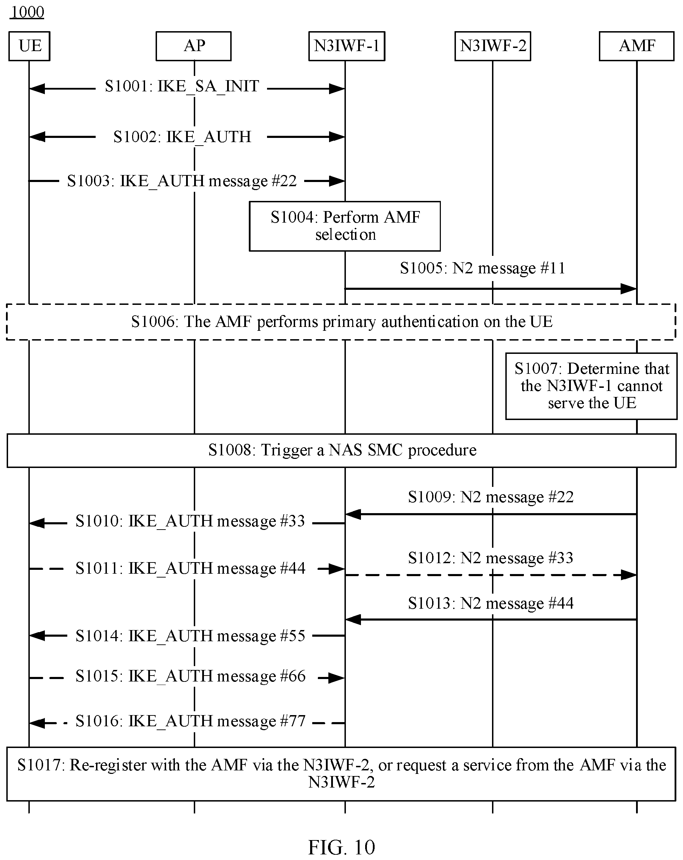

FIG. 10 is an example flowchart of a communication method 1000 according to an embodiment of this application. Compared with the method 900 in which the registration complete message and the registration reject message are involved, and the registration complete or reject message is transmitted after the IPsec is established, the method 1000 relates only to a registration reject message, and does not complete an IPsec establishment process. As shown in FIG. 10, the method includes the following plurality of steps.

S1001: UE performs IKE_SA_INIT exchange with a N3IWF-1.

S1002: The N3IWF-1 performs IKE_AUTH exchange with the UE.

For example, the UE sends an IKE_AUTH message #11 to the N3IWF-1, and receives an IKE_AUTH message #11' from the N3IWF-1. Correspondingly, the N3IWF-1 receives the IKE_AUTH message #11 from the UE, and sends the IKE_AUTH message #11' to the UE.

S1003: The UE sends an IKE_AUTH message #22 to the N3IWF-1.

Correspondingly, the N3IWF-1 receives the IKE_AUTH message #22 from the UE.

The IKE_AUTH message #22 includes a NAS registration request message #11. The registration request message #11 carries first identification information. The first identification information may be an SUCI or a 5G-GUTI.

S1004: The N3IWF-1 performs AMF selection.

S1005: The N3IWF-1 sends an N2 message #11 to an AMF.

Correspondingly, the AMF receives the N2 message #11 from the N3IWF-1.

The N2 message #11 includes the NAS registration request message #11.

S1006: Optionally, the AMF performs primary authentication and NAS SMC procedures on the UE.

For a specific implementation of steps S1001 to S1006, refer to steps S901 to S906 in the method 900. For brevity, details are not described herein again.

S1007: The AMF determines that the N3IWF-1 cannot serve the UE.

For example, the AMF may determine, based on information about a slice requested by the UE for access, that the current N3IWF-1 cannot serve the slice; or the AMF may determine, based on geographic location information of the N3IWF-1, that the N3IWF-1 cannot serve the current UE. For a specific implementation, refer to step S801 in the method 800. For brevity, details are not described herein again.

Further, the AMF determines that the AMF needs to relocate a N3IWF-2 for the UE.

It should be specially noted that in this implementation, the registration reject message in steps S1013 and S1014 carries information about the N3IWF-2, to notify the UE that the UE needs to re-access the AMF via the N3IWF-2. To enable the UE to determine authenticity of the registration reject message, release a connection to the N3IWF-1, and re-access the AMF via the N3IWF-2, the AMF needs to trigger the NAS SMC procedure before sending the registration reject message, that is, perform steps S1008 to S1012, to ensure that the UE knows that the AMF is authentic. In this way, the UE can determine that the registration reject message received in subsequent step S1014 is also authentic and is not sent by an attacker, then release the connection to the N3IWF-1, and establish a secure connection to the N3IWF-2.

S1008: The AMF triggers the NAS SMC procedure.

For a specific implementation, refer to step S409 to S418 in the method 400. For brevity, details are not described herein again.

It should be noted that a sequence of performing steps S1007 and S1008 is not specifically limited in this application.

For example, step S1008 may be performed before step S1007. In this case, the AMF first performs the NAS SMC procedure, and then determines whether there is one or more N3IWFs that are more appropriate than the N3IWF-1 to serve the UE. If there is one or more N3IWFs that are more appropriate, the AMF determines that the AMF needs to relocate an N3IWF, for example, the N3IWF-2, for the UE.

For example, step S1008 may be performed after step S1007. In this case, the AMF first determines whether there is one or more N3IWFs that are more appropriate than N3IWF-1 to serve the UE. If there is one or more N3IWFs that are more appropriate, the AMF determines that the AMF needs to relocate an N3IWF, for example, the N3IWF-2, for the UE. In this case, the AMF determines that security needs to be established, and then sends the NAS SMC procedure. It should be noted that establishing the secure connection herein means at least establishing NAS security between the UE and the AMF. Further, establishing the secure connection may also be completing establishment of an IPsec secure connection between the UE and the N3IWF. For a specific implementation, refer to step S419 to S422 in the method 400. For brevity, details are not described herein again.

Optionally, the AMF may generate a second key K_{N3IWF-1} based on a second key parameter.

S1009: The AMF sends an N2 message #22 to the N3IWF-1.

Correspondingly, the N3IWF-1 receives the N2 message #22 from the AMF.

The N2 message #22 carries a relocation request message #1.

S1010: The N3IWF-1 sends an IKE_AUTH message #33 to the UE.

Correspondingly, the UE receives the IKE_AUTH message #33 from the N3IWF-1.

The IKE_AUTH message #C is an IKE_AUTH response (EAP-Req/5G-NAS/NAS-PDU) message, and the NAS-PDU includes the relocation request message #1 in step S1009.

It should be understood that after integrity protection of the relocation request message #1 is successfully verified, the UE determines that the UE needs to re-access the AMF via the N3IWF-2.

S1011: Optionally, the UE sends an IKE_AUTH message #44 to the N3IWF-1.

Correspondingly, the N3IWF-1 receives the IKE_AUTH message #44 from the AMF.

The IKE_AUTH message #44 carries a relocation response message #1.

S1012: Optionally, the N3IWF-1 sends an N2 message #33 to the AMF.

Correspondingly, the AMF receives the N2 message #33 from the N3IWF-1.

The N2 message #33 carries the relocation response message #1.

It should be noted that if step S1011 is performed, step S1012 also needs to be performed.

For a specific implementation of steps S1009 to S1012, refer to steps S908 to S911 in the method 900. For brevity, details are not described herein again.

S1013: The AMF sends an N2 message #44 to the N3IWF-1.

The N2 message #44 may be an N2 initial context setup request message.

Correspondingly, the N3IWF-1 receives the N2 message #44 from the AMF.

The N2 message #44 includes a NAS registration reject message. In other words, the AMF sends the NAS registration reject message to the UE. The NAS registration reject message is protected through at least NAS integrity. Optionally, the NAS registration reject message may also be protected through confidentiality.

Optionally, the N3IWF-1 determines that access fails.

In a possible implementation, the N2 message #44 includes failure indication information, and the N3IWF-1 determines that access fails based on the failure indication information.

In another possible implementation, the N3IWF determines, based on that the N2 message #44 does not carry the second key K_{N3IWF-1}, that access fails. For example, when the AMF generates the second key K_{N3IWF-1}, the N2 message #44 does not carry the second key K_{N3IWF-1}.

Optionally, if the 5G-GUTI is carried by the UE in step S1003, the AMF reallocates a 5G-GUTI to the UE, and includes the 5G-GUTI in the NAS registration reject message. If the SUCI is carried by the UE in step S1003, the AMF allocates a 5G-GUTI to the UE, and includes the 5G-GUTI in the NAS registration reject message. In addition, the AMF stores a NAS security context of the UE. Compared with the conventional technology, in this implementation, after sending the NAS registration reject message, the AMF does not delete the security context related to the UE. When receiving the NAS registration reject message, the UE does not delete the NAS security context either. This is because the UE may immediately re-access the AMF. If the NAS security context of the UE is deleted, when the UE performs accessing next time, the AMF needs to re-execute the primary authentication procedure in step S1006 and the NAS SMC procedure in step S1008. This wastes signaling overheads, prolongs access time, and reduces network efficiency. Therefore, after the NAS registration reject message is sent, the security context of the UE is still stored, thereby reducing signaling overheads and accelerating a registration process of the UE.

It should be noted that the foregoing steps S1009 to S1012 may be performed, or may not be performed. For example, if a relocation parameter is transferred in step S1013, the foregoing steps S1009 to S1012 may not be performed. For a specific implementation, refer to related descriptions in step S917 in the method 900. For brevity, details are not described herein again.

S1014: The N3IWF-1 sends an IKE_AUTH message #55 to the UE.

Correspondingly, the UE receives the IKE_AUTH message #55 from the N3IWF-1.

Specifically, the IKE_AUTH message #55 is an IKE_AUTH response (EAP-Req/5G-NAS/NAS-PDU) message, and the NAS-PDU includes the NAS registration reject message in step S1013.

It should be noted that the IKE_AUTH response (EAP-Req/5G-NAS/NAS-PDU) message is merely an example, and a specific message name is not limited in this application.

For example, after receiving the NAS registration reject message, the UE determines that the UE needs to re-access the AMF via the N3IWF-2. For example, the UE determines, based on the NAS registration reject message, that the UE needs to re-access the AMF via the N3IWF-2, or determines, based on the relocation request message #1, that the UE needs to re-access the AMF via the N3IWF-2. For a related identifier, refer to the related descriptions of step S808 (not mentioning performing integrity protection verification) or step S1010 (mentioning performing integrity protection verification).

Further, after the UE determines that the UE needs to perform re-accessing via the N3IWF-2, if the registration reject message includes a new 5G-GUTI, the UE stores the new 5G-GUTI, and stores the NAS security context. If the registration reject message does not include the new 5G-GUTI, only the NAS security context is stored.

S1015: Optionally, the UE sends an IKE_AUTH message #66 to the N3IWF-1.

Correspondingly, the N3IWF-1 receives the IKE_AUTH message #66 from the UE.

The KE_AUTH message #66 notifies the N3IWF-1 to release the IPsec connection.

It should be noted that, in a scenario in which the N3IWF-1 actively releases the connection, step S1015 does not need to be performed.

S1016: Optionally, the N3IWF-1 sends an IKE_AUTH message #77 to the UE.

Correspondingly, the UE receives the IKE_AUTH message #77 from the N3IWF-1.

The IKE_AUTH message #77 includes an EAP-Failure message. The N3IWF-1 may send the EAP-Failure message to the UE based on the failure indication information carried in step S1013, or send the EAP-Failure message to the UE based on the NAS registration reject message carried in step S1013.

S1017: The UE requests re-registration with the AMF again via the N3IWF-2, or the UE requests a service from the AMF via the N3IWF-2.

For a specific implementation, refer to step S918 in the method 900. For brevity, details are not described herein again.

It should be noted that the registration request message sent by the UE in step S1003 is activated in step S1008, and integrity protection is performed on the stored NAS security context. If the NAS registration reject message in the foregoing steps S1013 and S1014 carries the 5G-GUTI (newly allocated or initially delivered), the new 5G-GUTI needs to be used in the re-registration process in step S1017.

According to the method disclosed in this application, the AMF triggers the NAS SMC procedure, so that the UE establishes a security protection connection to the AMF, thereby ensuring that the registration reject message and the information about the N3IWF-2 that are subsequently received by the UE from the AMF are authentic. In this case, the UE may determine to re-access the AMF via the N3IWF-2, thereby ensuring security in a communication network.

It should be understood that, in FIG. 8 to FIG. 10, the untrusted non-3GPP access network (for example, a non-3GPP network device N3IWF) is used as an example to specifically describe the key generation synchronization method in the redirection case. It should be noted that the technical solutions (for example, the communication methods shown in FIG. 8 to FIG. 10) of this application are also applicable to a trusted non-3GPP access network (for example, a non-3GPP network device TNGF). In other words, the N3IWF is replaced with the TNGF. For a specific implementation, refer to the foregoing methods 800 to 1000. For brevity, details are not described herein again.

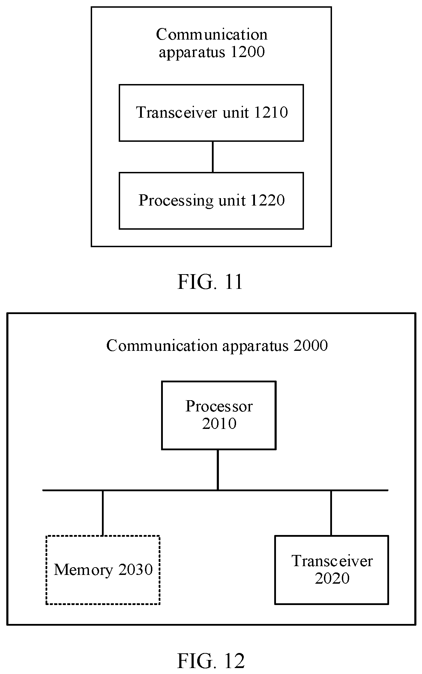

The foregoing describes in detail embodiments on a communication method side of this application with reference to FIG. 1 to FIG. 10. The following describes in detail embodiments on a communication apparatus side of this application with reference to FIG. 11 and FIG. 12. It should be understood that descriptions of the apparatus embodiments correspond to the descriptions of the method embodiments, and therefore for a part that is not described in detail, refer to the foregoing method embodiments.

FIG. 11 is a block diagram of a communication apparatus according to an embodiment of this application. As shown in FIG. 11, the apparatus 1200 may include a transceiver unit 1210 and a processing unit 1220. The transceiver unit 1210 may perform external communication, and the processing unit 1220 is configured to process data. The transceiver unit 1210 may also be referred to as a communication interface or a transceiver unit.

In a possible design, the apparatus 1200 may implement steps or procedures corresponding to the UE in the foregoing method embodiments. The processing unit 1220 is configured to perform processing-related operations of the UE in the foregoing method embodiments, and the transceiver unit 1210 is configured to perform receiving and sending-related operations of the UE in the foregoing method embodiments.

In another possible design, the apparatus 1200 may implement steps or procedures corresponding to the AMF in the foregoing method embodiments. The transceiver unit 1210 is configured to perform receiving and sending-related operations of the AMF in the foregoing method embodiments, and the processing unit 1220 is configured to perform processing-related operations of the AMF in the foregoing method embodiments.

It should be understood that the apparatus 1200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that, the apparatus 1200 may be specifically a transmit end in the foregoing embodiments, and may be configured to perform the procedures and/or steps corresponding to the transmit end in the foregoing method embodiments. Alternatively, the apparatus 1200 may be specifically a receive end in the foregoing embodiments, and may be configured to perform the procedures and/or steps corresponding to the receive end in the foregoing method embodiments. To avoid repetition, details are not described herein again.

The apparatus 1200 in the foregoing solutions has a function of implementing the corresponding steps performed by the transmit end in the foregoing methods, or has a function of implementing the corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving and sending operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus in FIG. 11 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 12 shows a communication apparatus 2000 according to an embodiment of this application. As shown in FIG. 12, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through the internal connection path. The memory 2030 is configured to store the instructions. The processor 2010 may execute the instructions stored in the memory 2030.

In a possible implementation, the apparatus 2000 is configured to implement the procedures and the steps corresponding to the UE in the foregoing method embodiments.

In another possible implementation, the apparatus 2000 is configured to implement the procedures and the steps corresponding to the AMF in the foregoing method embodiments.

It should be understood that the apparatus 2000 may be specifically a transmit end or a receive end in the foregoing embodiments, or may be a chip or a chip system. Correspondingly, the transceiver 2020 may be a transceiver circuit of the chip. This is not limited herein. Specifically, the apparatus 2000 may be configured to perform the steps and/or procedures corresponding to the transmit end or the receive end in the foregoing method embodiments.

Optionally, the memory 2030 may include a read-only memory and a random access memory, and provides instructions and data for the processor. A part of the memory may further include a non-volatile random access memory. For example, the memory may further store information of a device type. The processor 2010 may be configured to execute the instructions stored in the memory. When the processor 2010 executes the instructions stored in the memory, the processor 2010 is configured to perform the steps and/or procedures in the foregoing method embodiments corresponding to the transmit end or the receive end.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For example but not for limitation, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory of the systems and methods described in this specification includes but is not limited to these and any memory of another proper type.

According to the methods provided in embodiments of this application, this application further provides a computer program product. The computer program product includes computer program code. When the computer program code is run on a computer, the computer is enabled to perform the method in the foregoing embodiments.

According to the methods provided in embodiments of this application, this application further provides a computer-readable medium, and the computer-readable medium stores program code. When the program code is run on a computer, the computer is enabled to perform the methods in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

**In** the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. **In** addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computing device (which may be a personal computer, a server, or a network device) to perform all or a part of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a mobility management function network element AMF, a first registration request message sent by a terminal device via a first non-3GPP network device, wherein the first registration request message comprises first identification information of the terminal device, and the first registration request message is used to request to access a network;
when determining that the terminal device needs to be relocated to a second non-3GPP network device, sending, by the AMF, a first NAS message to the terminal device, wherein the first NAS message comprises identification information of the second non-3GPP network device, and the first NAS message indicates the terminal device to re-access the network via the second non-3GPP network device;
receiving, by the AMF, a second NAS message from the terminal device, wherein the second NAS message is used to request to access the network, and the second NAS message comprises a first key generation parameter;
generating, by the AMF, a first key based on the first key generation parameter, wherein the first key is used to establish a secure connection between the second non-3GPP network device and the terminal device; and
sending, by the AMF, the first key to the second non-3GPP network device.

2. The method according to claim 1, wherein the generating, by the AMF, a first key based on the first key generation parameter comprises:
obtaining, by the AMF, an uplink NAS COUNT value based on the first key generation parameter; and
calculating, by the AMF, the first key by using a root key and the uplink NAS COUNT value as input parameters, wherein the root key is a key used to generate a NAS security context between the AMF and the terminal device.

3. The method according to claim 1 or 2, wherein before the sending, by the AMF, a first NAS message to the terminal device, the method further comprises:
determining, by the AMF, whether the terminal device needs to be relocated to the second non-3GPP network device.

4. The method according to claim 3, wherein the first registration request message comprises information about a slice requested by the terminal device, and the determining, by the AMF, whether the terminal device needs to be relocated to the second non-3GPP network device comprises:
determining, by the AMF based on the information about the slice, whether the terminal device needs to be relocated to the second non-3GPP network device; or
determining, by the AMF based on location information of the first non-3GPP network device, whether the terminal device needs to be relocated to the second non-3GPP network device; or
determining, by the AMF based on local pre-configuration information, whether the terminal device needs to be relocated to the second non-3GPP network device.

5. The method according to any one of claims 1 to 4, wherein the identification information of the second non-3GPP network device comprises internet protocol IP address information of the second non-3 GPP network device or fully qualified domain name FQDN information of the second non-3GPP network device.

6. The method according to any one of claims 1 to 5, wherein the first NAS message further comprises a first cause value; and
the first cause value indicates the terminal device to re-access the network via the second non-3GPP network device.

7. The method according to any one of claims 1 to 6, wherein the first NAS message is any one of the following messages:
a relocation request message, a downlink NAS transport message, a configuration update command message, a registration reject message, or a registration complete message.

8. The method according to any one of claims 1 to 7, wherein before the generating, by the AMF, a first key based on the first key generation parameter, the method further comprises:
determining, by the AMF, whether the second NAS message is received via the second non-3GPP network device.

9. The method according to any one of claims 1 to 8, wherein the generating, by the AMF, a first key based on the first key generation parameter comprises:
when determining that the second NAS message is received via the second non-3GPP network device, generating, by the AMF, the first key based on the first key generation parameter.

10. The method according to any one of claims 1 to 7, wherein the method further comprises:
determining, by the AMF, whether the AMF has relocated another non-3GPP network device for the first terminal device; and
the generating, by the AMF, a first key based on the first key generation parameter comprises:
when determining that the AMF has relocated another non-3GPP network device for the first terminal device, generating, by the AMF, the first key based on the first key generation parameter.

11. The method according to any one of claims 1 to 10, wherein before the sending, by the AMF, a first NAS message to the terminal device, the method further comprises:
receiving, by the AMF, a third NAS message sent by the terminal device via the first non-3GPP network device, wherein the third NAS message comprises a second key generation parameter;
generating, by the AMF, a second key based on the second key generation parameter, wherein the second key is used to establish a secure connection between the first non-3GPP network device and the terminal device; and
sending, by the AMF, the second key to the first non-3GPP network device.

12. The method according to claim 11, wherein the method further comprises:
when determining that the secure connection between the first non-3GPP network device and the terminal device has been established, sending, by the AMF, a first registration complete message or a first registration reject message to the terminal device in response to the first registration request message, wherein the first registration complete message and the first registration reject message comprise a first 5G globally unique temporary identity 5G-GUTI.

13. The method according to claim 11, wherein the sending, by the AMF, a first NAS message to the terminal device comprises:
when determining that the secure connection between the first non-3GPP network device and the terminal device has been established, sending, by the AMF, the first NAS message to the terminal device in response to the first registration request message, wherein the first NAS message is a first registration complete message or a first registration reject message, and the first registration complete message and the first registration reject message comprise a first 5G-GUTI.

14. The method according to any one of claims 1 to 10, wherein before the sending, by the AMF, a first NAS message to the terminal device, the method further comprises:
receiving, by the AMF, a third NAS message sent by the terminal device via the first non-3GPP network device, wherein the third NAS message comprises a second key generation parameter;
generating, by the AMF, a second key based on the second key generation parameter, wherein the second key is used to establish a secure connection between the first non-3GPP network device and the terminal device; and
after the sending, by the AMF, a first NAS message to the terminal device, and before the receiving, by the AMF, a second NAS message from the terminal device, the method further comprises:
sending, by the AMF, the second key to the first non-3GPP network device; and
when determining that the secure connection between the first non-3GPP network device and the terminal device has been established, sending, by the AMF, a first registration complete message or a first registration reject message to the terminal device in response to the first registration request message, wherein the first registration complete message and the first registration reject message comprise a first 5G-GUTI.

15. The method according to any one of claims 12 to 14, wherein after the sending, by the AMF, a first registration reject message to the terminal device, the method further comprises:
locally storing, by the AMF, the NAS security context of the terminal device, wherein the NAS security context is used to protect the second NAS message.

16. The method according to any one of claims 1 to 10, wherein before the receiving, by the AMF, a second NAS message from the terminal device, the method further comprises:
when determining that NAS security between the AMF and the terminal device is activated, sending, by the AMF, a first registration reject message to the terminal device in response to the first registration request message, wherein the first registration reject message is the first NAS message, and the first registration reject message comprises a first 5G-GUTI; and
locally storing, by the AMF, the NAS security context of the terminal device, wherein the NAS security context is used to protect the second NAS message.

17. A communication method, comprising:
sending, by a terminal device, a first registration request message to a mobility management function AMF via a first non-3GPP network device, wherein the first registration request message comprises first identification information of the terminal device, and the first registration request message is used to request to access a network;
receiving, by the terminal device, a first NAS message from the AMF, wherein the first NAS message comprises identification information of a second non-3GPP network device, and the first NAS message indicates the terminal device to re-access the network via the second non-3GPP network device;
sending, by the terminal device, a second NAS message to the AMF via the second non-3GPP network device, wherein the second NAS message is used to request to access the network, and the second NAS message comprises a first key generation parameter; and
generating, by the terminal device, a first key based on the first key generation parameter, wherein the first key is used to establish a secure connection between the second non-3GPP network device and the terminal device.

18. The method according to claim 17, wherein the generating, by the terminal device, a first key based on the first key generation parameter comprises:
obtaining, by the terminal device, an uplink NAS COUNT value based on the first key generation parameter; and
calculating, by the terminal device, the first key by using a root key and the uplink NAS COUNT value as input parameters, wherein the root key is used to generate a NAS security context between the terminal device and the AMF.

19. The method according to claim 17 or 18, wherein the identification information of the second non-3 GPP network device comprises internet protocol IP address information of the second non-3GPP network device or fully qualified domain name FQDN information of the second non-3GPP network device.

20. The method according to any one of claims 17 to 19, wherein before the sending, by the terminal device, a second NAS message to the AMF, the method further comprises:
determining, by the terminal device based on the first NAS message, that the terminal device needs to re-access the network via the second non-3GPP network device.

21. The method according to claim 20, wherein the determining, by the terminal device based on the first NAS message, that the terminal device needs to re-access the network via the second non-3GPP network device comprises:
determining, by the terminal device based on the identification information of the second non-3GPP network device, that the terminal device needs to re-access the network via the second non-3GPP network device.

22. The method according to any one of claims 17 to 21, wherein before the sending, by the terminal device, a second NAS message to the AMF, the method further comprises:
determining, by the terminal device according to a local policy or a preset value method, that the terminal device needs to re-access or immediately access the network via the second non-3GPP network device.

23. The method according to any one of claims 20 to 22, wherein the first NAS message further comprises a first cause value, and the first cause value indicates that the terminal device needs to re-access the second non-3GPP network device; and
the determining, by the terminal device based on the first NAS message, that the terminal device needs to re-access the network via the second non-3GPP network device comprises:
determining, by the terminal device based on the first cause value, that the terminal device needs to re-access the network based on the FQDN information of the second non-3GPP network device; or
determining, by the terminal device, the second non-3GPP network device based on the identification information of the second non-3GPP network device, and determining, by the terminal device based on the first cause value, that the terminal device needs to re-access or immediately access the network via the second non-3GPP network device.

24. The method according to any one of claims 17 to 23, wherein the first NAS message is any one of the following messages:
a relocation request message, a downlink NAS transport message, a configuration update command message, a registration complete message, or a registration reject message.

25. The method according to any one of claims 17 to 24, wherein before the receiving, by the terminal device, a first NAS message from the AMF, the method further comprises:
sending, by the terminal device, a third NAS message to the AMF via the first non-3GPP network device, wherein the third NAS message comprises a second key generation parameter; and
generating, by the terminal device, a second key based on the second key generation parameter, wherein the second key is used to establish a secure connection between the first non-3GPP network device and the terminal device.

26. The method according to claim 25, wherein the method further comprises:
when determining that the secure connection between the first non-3GPP network device and the terminal device has been established, receiving, by the terminal device, a first registration complete message or a first registration reject message from the AMF in response to the first registration request message, wherein the first registration complete message and the first registration reject message comprise a first 5G globally unique temporary identity 5G-GUTI.

27. The method according to claim 25, wherein the receiving, by the terminal device, a first NAS message from the AMF comprises:
when determining that the secure connection between the first non-3GPP network device and the terminal device has been established, receiving, by the terminal device, the first NAS message from the AMF in response to the first registration request message, wherein the first NAS message is a first registration complete message or a first registration reject message, and the first registration complete message and the first registration reject message comprise a first 5G-GUTI.

28. The method according to any one of claims 17 to 24, wherein before the receiving, by the terminal device, a first NAS message from the AMF, the method further comprises:
sending, by the terminal device, a third NAS message to the AMF via the first non-3GPP network device, wherein the third NAS message comprises a second key generation parameter;
generating, by the terminal device, a second key based on the second key generation parameter, wherein the second key is used to establish a secure connection between the first non-3GPP network device and the terminal device; and
after the receiving, by the terminal device, a first NAS message from the AMF, and before the sending, by the terminal device, a second NAS message to the AMF via the second non-3GPP network device, the method further comprises:
establishing, by the terminal device, the secure connection to the first non-3GPP network device; and
when determining that the secure connection between the first non-3GPP network device and the terminal device has been established, receiving, by the terminal device, a first registration complete message or a first registration reject message from the AMF in response to the first registration request message, wherein the first registration complete message and the first registration reject message comprise a first 5G-GUTI.

29. The method according to any one of claims 26 to 28, wherein after the receiving, by the terminal device, a first registration reject message from the AMF, the method further comprises:
locally storing, by the terminal device, the NAS security context of the terminal device, wherein the NAS security context is used to protect the second NAS message.

30. The method according to any one of claims 17 to 24, wherein before the sending, by the terminal device, a second NAS message to the AMF via the second non-3GPP network device, the method further comprises:
when determining that NAS security between the terminal device and the AMF is activated, receiving, by the terminal device, a first registration reject message from the AMF in response to the first registration request message, wherein the first registration reject message is the first NAS message, and the first registration reject message comprises a first 5G-GUTI; and
locally storing, by the terminal device, the NAS security context of the terminal device, wherein the NAS security context is used to protect the second NAS message.

31. A communication method, comprising:
sending, by a terminal device, a first registration request message to a mobility management function network element AMF via a first non-3GPP network device, and receiving, by the mobility management function network element AMF, the first registration request message sent by the terminal device via the first non-3GPP network device, wherein the first registration request message comprises first identification information of the terminal device, and the first registration request message is used to request to access a network;
when determining that the terminal device needs to be relocated to a second non-3GPP network device, sending, by the AMF, a first NAS message to the terminal device, and receiving, by the terminal device, the first NAS message from the AMF, wherein the first NAS message comprises identification information of the second non-3GPP network device, and the first NAS message indicates the terminal device to re-access the network via the second non-3GPP network device;
sending, by the terminal device, a second NAS message to the AMF via the second non-3GPP network device, and receiving, by the AMF, the second NAS message from the terminal device, wherein the second NAS message is used to request to access the network, and the second NAS message comprises a first key generation parameter;
generating, by the AMF, a first key based on the first key generation parameter, wherein the first key is used to establish a secure connection between the second non-3GPP network device and the terminal device;
generating, by the terminal device, the first key based on the first key generation parameter; and
sending, by the AMF, the first key to the second non-3GPP network device, and receiving, by the second non-3GPP network device, the first key sent by the AMF.

32. The method according to claim 31, wherein the generating, by the AMF, a first key based on the first key generation parameter comprises:
obtaining, by the AMF, an uplink NAS COUNT value based on the first key generation parameter; and
calculating, by the AMF, the first key by using a root key and the uplink NAS COUNT value as input parameters, wherein the root key is a key used to generate a NAS security context between the AMF and the terminal device.

33. The method according to claim 31 or 32, wherein the generating, by the terminal device, the first key based on the first key generation parameter comprises:
obtaining, by the terminal device, an uplink NAS COUNT value based on the first key generation parameter; and
calculating, by the terminal device, the first key by using a root key and the uplink NAS COUNT value as input parameters, wherein the root key is used to generate a NAS security context between the terminal device and the AMF.

34. The method according to any one of claims 31 to 33, wherein before the sending, by the AMF, a first NAS message to the terminal device, the method further comprises:
determining, by the AMF, whether the terminal device needs to be relocated to the second non-3GPP network device.

35. The method according to claim 34, wherein the first registration request message comprises information about a slice requested by the terminal device, and the determining, by the AMF, whether the terminal device needs to be relocated to the second non-3GPP network device comprises:
determining, by the AMF based on the information about the slice, whether the terminal device needs to be relocated to the second non-3GPP network device; or
determining, by the AMF based on location information of the first non-3GPP network device, whether the terminal device needs to be relocated to the second non-3GPP network device; or
determining, by the AMF based on local pre-configuration information, whether the terminal device needs to be relocated to the second non-3GPP network device.

36. The method according to any one of claims 31 to 35, wherein the identification information of the second non-3GPP network device comprises internet protocol IP address information of the second non-3GPP network device or fully qualified domain name FQDN information of the second non-3GPP network device.

37. The method according to any one of claims 31 to 36, wherein before the sending, by the terminal device, a second NAS message to the AMF, the method further comprises:
determining, by the terminal device based on the first NAS message, that the terminal device needs to re-access the network via the second non-3GPP network device.

38. The method according to claim 37, wherein the determining, by the terminal device based on the first NAS message, that the terminal device needs to re-access the network via the second non-3GPP network device comprises:
determining, by the terminal device based on the identification information of the second non-3GPP network device, that the terminal device needs to re-access the network via the second non-3GPP network device.

39. The method according to any one of claims 31 to 38, wherein before the sending, by the terminal device, a second NAS message to the AMF, the method further comprises:
determining, by the terminal device according to a local policy or a preset value method, that the terminal device needs to re-access or immediately access the network via the second non-3GPP network device.

40. The method according to any one of claims 31 to 39, wherein the first NAS message further comprises a first cause value, and the first cause value indicates the terminal device to re-access the network via the second non-3GPP network device; and
the determining, by the terminal device based on the first NAS message, that the terminal device needs to re-access the network via the second non-3GPP network device comprises:
determining, by the terminal device based on the first cause value, that the terminal device needs to re-access the network based on the FQDN information of the second non-3GPP network device; or
determining, by the terminal device, the second non-3GPP network device based on the identification information of the second non-3GPP network device, and determining, by the terminal device based on the first cause value, that the terminal device needs to re-access or immediately access the network via the second non-3GPP network device.

41. The method according to any one of claims 31 to 40, wherein the first NAS message is any one of the following messages: a relocation request message, a downlink NAS transport message, a configuration update command message, a registration reject message, or a registration complete message.

42. The method according to any one of claims 31 to 41, wherein before the generating, by the AMF, a first key based on the first key generation parameter, the method further comprises:
determining, by the AMF, whether the second NAS message is received via the second non-3GPP network device.

43. The method according to any one of claims 31 to 42, wherein the generating, by the AMF, a first key based on the first key generation parameter comprises:
when determining that the second NAS message is received via the second non-3GPP network device, generating, by the AMF, the first key based on the first key generation parameter.

44. The method according to any one of claims 31 to 43, wherein the method further comprises:
determining, by the AMF, whether the AMF has relocated another non-3GPP network device for the first terminal device; and
the generating, by the AMF, a first key based on the first key generation parameter comprises:
when determining that the AMF has relocated another non-3GPP network device for the first terminal device, generating, by the AMF, the first key based on the first key generation parameter.

45. The method according to any one of claims 31 to 44, wherein before the sending, by the AMF, a first NAS message to the terminal device, the method further comprises:
sending, by the terminal device, a third NAS message to the AMF via the first non-3GPP network device, and receiving, by the AMF, the third NAS message sent by the terminal device via the first non-3GPP network device, wherein the third NAS message comprises a second key generation parameter;
generating, by the AMF, a second key based on the second key generation parameter, wherein the second key is used to establish a secure connection between the first non-3GPP network device and the terminal device;
generating, by the terminal device, the second key based on the second key generation parameter; and
sending, by the AMF, the second key to the first non-3GPP network device, and receiving, by the first non-3GPP network device, the second key from the AMF.

46. The method according to claim 45, wherein the method further comprises:
when determining that the secure connection between the first non-3GPP network device and the terminal device has been established, sending, by the AMF, a first registration complete message or a first registration reject message to the terminal device in response to the first registration request message, and receiving, by the terminal device, the first registration complete message or the first registration reject message from the AMF, wherein the first registration complete message and the first registration reject message comprise a first 5G globally unique temporary identity 5G-GUTI.

47. The method according to claim 45, wherein the sending, by the AMF, a first NAS message to the terminal device comprises:
when determining that the secure connection between the first non-3GPP network device and the terminal device has been established, sending, by the AMF, the first NAS message to the terminal device in response to the first registration request message, and receiving, by the terminal device, the first NAS message from the AMF, wherein the first NAS message is a first registration complete message or a first registration reject message, and the first registration complete message and the first registration reject message comprise a first 5G-GUTI.

48. The method according to any one of claims 31 to 47, wherein before the sending, by the AMF, a first NAS message to the terminal device, the method further comprises:
sending, by the terminal device, a third NAS message to the AMF via the first non-3GPP network device, and receiving, by the AMF, the third NAS message sent by the terminal device via the first non-3GPP network device, wherein the third NAS message comprises a second key generation parameter;
generating, by the terminal device, a second key based on the second key generation parameter, wherein the second key is used to establish a secure connection between the first non-3GPP network device and the terminal device;
generating, by the AMF, the second key based on the second key generation parameter; and
after the sending, by the AMF, a first NAS message to the terminal device, and before the receiving, by the AMF, a second NAS message from the terminal device, the method further comprises:
sending, by the AMF, the second key to the first non-3GPP network device, and receiving, by the first non-3GPP network device, the second key from the AMF; and
when determining that the secure connection between the first non-3GPP network device and the terminal device has been established, sending, by the AMF, a first registration complete message or a first registration reject message to the terminal device in response to the first registration request message, and receiving, by the terminal device, the first registration complete message or the first registration reject message from the AMF, wherein the first registration complete message and the first registration reject message comprise a first 5G-GUTI.

49. The method according to any one of claims 46 to 48, wherein after the sending, by the AMF, a first registration reject message to the terminal device, the method further comprises:
locally storing, by the AMF, the NAS security context of the terminal device, wherein the NAS security context is used to protect the second NAS message; and
locally storing, by the terminal device, the NAS security context of the terminal device.

50. The method according to any one of claims 31 to 49, wherein before the receiving, by the AMF, a second NAS message from the terminal device, the method further comprises:
when determining that NAS security between the AMF and the terminal device is activated, sending, by the AMF, a first registration reject message to the terminal device in response to the first registration request message, and receiving, by the terminal device, the first registration reject message from the AMF, wherein the first registration reject message is the first NAS message, and the first registration reject message comprises a first 5G-GUTI;
locally storing, by the AMF, the NAS security context of the terminal device, wherein the NAS security context is used to protect the second NAS message; and
locally storing, by the terminal device, the NAS security context of the terminal device.

51. A communication apparatus, comprising a module or a unit configured to perform the method according to any one of claims 1 to 16.

52. A communication apparatus, comprising a module or a unit configured to perform the method according to any one of claims 17 to 30.

53. A communication apparatus, comprising a processor, wherein the processor is coupled to a memory, and the processor is configured to execute a computer program stored in the memory, to enable the apparatus to perform the method according to any one of claims 1 to 30.

54. A communication system, wherein the communication system comprises the communication apparatus according to claim 51 or 52.

55. A chip, comprising a processor, configured to invoke a computer program from a memory and run the computer program, so that a communication apparatus on which the chip is installed performs the method according to any one of claims 1 to 16, or a communication apparatus on which the chip is installed performs the method according to any one of claims 17 to 30.

56. A computer-readable storage medium, wherein the computer-readable storage medium stores a computer program; and when the computer program is run, a computer is enabled to perform the method according to any one of claims 1 to 16, or a computer is enabled to perform the method according to any one of claims 17 to 30.

57. A computer program, wherein when the computer program is executed by a communication apparatus, the method according to any one of claims 1 to 16 is implemented, or the method according to any one of claims 17 to 30 is implemented.
